(19) Europäisches Patentamt
European Patent Office
Office européen des brevets

(11) EP 1 055 710 B1

(12) **EUROPÄISCHE PATENTSCHRIFT**

(45) Veröffentlichungstag und Bekanntmachung des Hinweises auf die Patenterteilung:
**11.08.2004 Patentblatt 2004/33**

(51) Int Cl.[7]: **C09B 62/04**, C09B 62/503

(21) Anmeldenummer: **00110339.9**

(22) Anmeldetag: **13.05.2000**

(54) **Wasserlösliche faserreaktive Farbstoffe, Verfahren zu ihrer Herstellung und ihre Verwendung**

Water-soluble fibre-reactive dyestuffs, process for their preparation and their use

Colorants réactifs sur la fibre solubles dans l'eau, procédé pour leur préparation et leur utilisation

(84) Benannte Vertragsstaaten:
**AT BE CH CY DE DK ES FI FR GB GR IE IT LI LU MC NL PT SE**

(30) Priorität: **26.05.1999 DE 19923989**

(43) Veröffentlichungstag der Anmeldung:
**29.11.2000 Patentblatt 2000/48**

(73) Patentinhaber: **DyStar Textilfarben GmbH & Co. Deutschland KG**
**65926 Frankfurt am Main (DE)**

(72) Erfinder:
- **Dannheim, Jörg, Dr.**
  **60489 Frankfurt am Main (DE)**
- **Ehrenberg, Stefan, Dr.**
  **60528 Frankfurt am Main (DE)**

(56) Entgegenhaltungen:
**EP-A- 0 382 111**
**EP-A- 0 541 057**
**EP-A- 0 629 667**
**EP-A- 0 644 239**
**EP-A- 0 697 443**
**WO-A-94/21646**
**WO-A-94/29282**
**DE-A- 19 504 800**
**GB-A- 2 332 681**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung liegt auf dem technischen Gebiet der faserreaktiven Farbstoffe.

Aus den Patentanmeldungs-Veröffentlichungen Nrs. EP-A-0 629 667, EP-A-0 382111, EP-A-0 541 057, EP-A-0 644 239, EP-A-0 679 443, WO 94 21646 A, WO 94 29282 A, DE 195 04 800 A VA WO 90 13603 A und WO 90 13604 A sind faserreaktive Farbstoffe bekannt, die eine faserreaktive Gruppe der Vinylsulfonreihe und des weiteren einen durch eine Cyanamidogruppe substituierten s-Triazinylamino-Rest besitzen.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolgedessen besteht weiterhin ein Bedarf nach neuen faserreaktiven Farbstoffen, die verbesserte Eigenschaften, insbesondere in anwendungstechnischer Sicht, aufweisen. Insbesondere sollen auch bei sehr kurzen Flottenverhältnissen Färbungen erzielt werden, die möglichst farbstark, gut auswaschbar und von hoher Egalität sind.

Mit der vorliegenden Erfindung wurden nunmehr neue, wertvolle faserreaktive Farbstoffe der nachstehend angegebenen und definierten allgemeinen Formel (1) gefunden, die die geforderten anwendungstechnischen Eigenschaften besitzen. Die neuen, erfindungsgemäßen Farbstoffe besitzen die allgemeinen Formel (1)

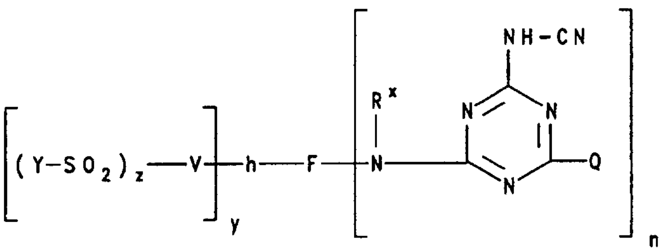

(1)

in welcher bedeuten:

F ist der Rest eines Monoazo-, Disazo- oder Polyazofarbstoffes oder eines davon abgeleiteten Schwermetallkomplex-Azofarbstoffes oder eines , Azomethin-, Phenazin-, Stilben-, Triphenylmethan-, Xanthen-, Thioxanthen-, Nitroaryl-, Naphthochinon-, Pyrenchinon- oder Perlyentetracarbimid-Farbstoffes;

$R^x$ ist ein Wasserstoffatom oder eine Alkylgruppe von 1 bis 4 C-Atomen, wie die Methyl- oder Ethylgruppe, die durch Halogen, wie Chlor und Brom, Hydroxy, Cyano, Alkoxy von 1 bis 4 C-Atomen, wie Methoxy und Ethoxy, Alkoxycarbonyl von 2 bis 5 C-Atomen, Carboxy, Sulfamoyl, Sulfo oder Sulfato substituiert sein kann, bevorzugt die Methyl- oder Ethylgruppe und insbesondere ein Wasserstoffatom;

n ist die Zahl 1 oder 2, bevorzugt 1;

Q ist eine Gruppe der allgemeinen Formel (2)

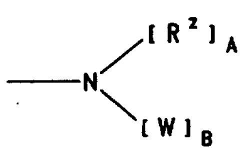

(2)

in welcher

$R^z$ ein Wasserstoffatom oder eine Alkylgruppe von 1 bis 4 C-Atomen, wie insbesondere die Methyl- oder Ethylgruppe, ist, die durch Halogen, wie Chlor und Brom, Hydroxy, Cyano, Alkoxy von 1 bis 4 C-Atomen, wie Methoxy und Ethoxy, Carboxy, Sulfamoyl, Sulfo oder Sulfato oder durch einen gegebenenfalls durch Substituenten aus der Gruppe Halogen, wie Chlor und Brom, Alkoxy von 1 bis 4 C-Atomen, wie Methoxy und Ethoxy, Alkyl von 1 bis 4 C-Atomen, wie Methyl, Sulfo und Carboxy substituierten Phenylrest substituiert sein kann, oder ein Cyclohexylrest oder ein gegebenenfalls durch Substituenten aus der Gruppe Halogen, wie Chlor und Brom, Alkoxy von 1 bis 4 C-Atomen, wie Methoxy und Ethoxy, Alkyl von 1 bis 4 C-Atomen, wie Methyl, Sulfo und Carboxy substituierter Phenylrest ist,

W Alkylen-$SO_2$-Y oder Alkylenl-Het-Alkylen-$SO_2$-Y ist, wobei Alkylen eine Alkylen gruppe mit 1 bis 2 C-Atomen, Het- eine Gruppe -O-, -NH-, -N(Alkyl)- mit Alkyl der obengenannten Bedeutung, -S- oder $SO_2$-bedeutet und Y

die untengenannte Bedeutung besitzt;

A die Zahl Null oder 1 bedeutet und

B die Zahl 1 oder 2 bedeutet,

wobei die Summe von (A + B) gleich der Zahl 2 ist und wobei im Falle von B gleich 2 die Gruppen der Formel -W- zueinander die gleiche Bedeutung oder eine voneinander verschiedene Bedeutung haben können;

V ist eine direkte Bindung oder eine Alkylengruppe oder ist ein gegebenenfalls substituierter Arylenrest oder ein Alkylen-arylen- oder Arylen-alkylen- oder Alkylen-arylen-alkylen- oder Arylen-alkylen-arylen-Rest oder eine durch eine der nachstehenden Heterogruppen unterbrochener Arylen-arylen-Rest, wobei die Alkylenreste solche von 1 bis 8, vorzugsweise von 2 bis 6, insbesondere von 2 bis 4 C-Atomen sind und substituiert sein können, beispielsweise durch Sulfo, Carboxy, Sulfato und/oder Phosphato, und die Arylenreste gegebenenfalls substituierte Phenylen- oder Naphthylenreste sind, und wobei die Alkylenreste durch 1 oder mehrere, wie 2 oder 3, Heterogruppen, wie -NH-, -N(R)- mit R gleich Alkyl von 1 bis 4 C-Atomen, das durch Sulfo, Carboxy, Sulfato, Phenyl oder Sulfophenyl substituiert sein kann, -O-, -S-, - $SO_2$-, -CO-, -$SO_2$-NH-, -NH-$SO_2$-, -NH-CO- und -CO-NH-, unterbrochen sein können und die Alkylen- und Arylenanteile in den kombinierten Alkylen/Arylen-Resten jeweils durch eine solche Heterogruppe voneinander getrennt sein können;

y ist die Zahl 1 oder 2, bevorzugt 1;

z ist die Zahl 1 oder 2, bevorzgt 1;

h ist im Falle von y gleich 2 ein N-Atom oder im Falle von y gleich 1 eine Gruppe der Formel -NH-, -N(R)- mit R einer der obengenannten Bedeutungen, -NH-CO-NH-, -NH-CO- oder -CO-NH- oder bevorzugt eine direkte Bindung;

Y ist die Vinylgruppe oder ist eine Ethylgruppe, die in β-Stellung einen alkalisch eliminierbaren Substituenten enthält, wie die β-Sulfatoethyl-, β-Thiosulfatoethyl- oder β-Phosphatoethyl-Gruppe oder eine β-ethyl-Gruppe mit 2 bis 5 C-Atomen im Alkanoylrest, wie die β-Acetyloxyethyl-Gruppe, oder die β-Benzoyloxy-ethyl-, β-(Sulfobenzoyloxy)-ethyl oder die β-(p-Toluolsulfonyloxy)-ethyl-Gruppe oder eine β-Halogenethyl-Gruppe, wie die β-Bromethyl- oder β-Chlorethyl-Gruppe, und ist bevorzugt die Vinylgruppe und insbesondere die β-Sulfatoethyl-Gruppe,

Bevorzugt ist F der Rest eines Mono- oder Disazofarbstoffes oder der Rest eines Metallkomplex-Azofarbstoffes, wie eines o,o'-1:1-Kupferkomplex-Monoazo- oder - Disazofarbstoffes.

Der Rest F kann in seinem Grundgerüst die bei organischen Farbstoffen üblichen Substituenten enthalten. Solche Substituenten sind beispielsweise: Alkylgruppen von 1 bis 4 C-Atomen, wie Methyl, Ethyl, Propyl, Isopropyl oder Butyl, hiervon bevorzugt Ethyl und insbesondere Methyl; Alkoxygruppen von 1 bis 4 C-Atomen, wie Methoxy, Ethoxy, Propoxy, Isopropoxy und Butoxy, bevorzugt hiervon Ethoxy und insbesondere Methoxy; Acylaminogruppen von 2 bis 8 C-Atomen, wie die Acetylamino-, Propionylamino- oder Benzoylaminogruppe; primäre und mono- oder disubstituierte Aminogruppen, wobei die Substituenten beispielsweise Alkylgruppen von 1 bis 4 C-Atomen und/oder Phenylgruppen sind, wie Monoalkylamino- und Dialkylaminogruppen mit 1 bis 4 C-Atomen im Alkylrest, Phenylamino- oder N-($C_1$-$C_4$-Alkyl)-N-phenyl-amino-Gruppen, wobei die Alkylreste noch substituiert sein können, beispielsweise durch Phenyl, Sulfophenyl, Hydroxy, Sulfato, Sulfo und Carboxy, und die Phenylgruppen noch substituiert sein können, wie durch Chlor, Sulfo, Carboxy, Methyl und/oder Methoxy, so beispielsweise Methylamino-, Ethylamino-, Propylamino-, Isopropylamino-, Butylamino-, N,N-Di-(β-hydroxyethyl)-amino-, N,N-Di-(β-sulfatoethyl)-amino-, Sulfobenzylamino-, N,N-Di-(sulfobenzyl)-amino- und Diethylaminogruppen sowie Phenylamino- und Sulfophenylaminogruppen; Alkoxycarbonylgruppen mit einem Alkylrest von 1 bis 4 C-Atomen, wie Methoxycarbonyl und Ethoxycarbonyl; Alkylsulfonylgruppen von 1 bis 4 C-Atomen, wie Methylsulfonyl und Ethylsulfonyl; Trifluormethyl-, Nitro- und Cyanogruppen; Halogenatome, wie Fluor, Chlor und Brom; Carbamoylgruppen, die durch Alkyl von 1 bis 4 C-Atomen mono- und disubstituiert sein können, wobei die Alkylreste wiederum substituiert sein können, beispielsweise durch Hydroxy, Sulfato, Sulfo, Carboxy, Phenyl und Sulfophenyl, wie beispielsweise N-Methyl-carbamoyl und N-Ethyl-carbamoyl; Sulfamoylgruppen, die durch Alkylgruppen von 1 bis 4 C-Atomen mono- oder disubstituiert sein können, und N-Phenyl-N-alkylsulfamoylgruppen mit einer Alkylgruppe von 1 bis 4 C-Atomen, wobei diese Alkylgruppen wiederum durch Hydroxy, Sulfato, Sulfo, Carboxy, Phenyl und Sulfophenyl substituiert sein können, wie beispielsweise N-Methyl-sulfamoyl, N-Ethyl-sulfamoyl, N-Propyl-sulfamoyl, N-Isopropyl-sulfamoyl, N-Butyl-sulfamoyl, N-(β-Hydroxyethyl)-sulfamoyl und N,N-Di-(β-hydroxyethyl)-sulfamoyl; N-Phenylsulfamoyl-, Ureido-, Hydroxy-, Carboxy-, Sulfomethyl- und Sulfogruppen.

Vorzugsweise ist der Farbstoffrest F durch eine oder mehrere, wie 2 bis 4, Sulfogruppen substituiert, und weiterhin kann er bevorzugt Substituenten enthalten, die aus der Gruppe Sulfo, Methyl, Ethyl, Methoxy, Ethoxy, Alkanoylamino von 2 bis 5 C-Atomen, wie Acetylamino, Benzoylamino, Amino, Chlor, Brom, Ureido, Hydroxy, Carboxy und Sulfomethyl ausgewählt sind.

Wasserlöslich-machende Gruppen in dem Rest W sind beispielsweise die Carboxy-, Sulfo-, Sulfato- und Phosphatogruppe.

In allen obigen Formeln können die einzelnen Formelglieder, sowohl verschiedener als auch gleicher Bezeichnung innerhalb einer allgemeinen Formel, im Rahmen ihrer Bedeutung zueinander gleiche oder voneinander verschiedene Bedeutungen haben.

Die Gruppen "Sulfo", "Carboxy", "Phosphato", "Thiosulfato" und "Sulfato" schließen sowohl deren Säureform als auch deren Salzform ein. Demgemäß bedeuten Sulfogruppen Gruppen entsprechend der allgemeinen Formel $-SO_3M$, Carboxygruppen Gruppen entsprechend der allgemeinen Formel -COOM, Phosphatogruppen Gruppen entsprechend der allgemeinen Formel $-OPO_3M_2$, Thiosulfatogruppen Gruppen entsprechend der allgemeinen Formel $-S-SO_3M$ und Sulfatogruppen Gruppen entsprechend der allgemeinen Formel $-OSO_3M$, in welchen

M ein Wasserstoffatom oder eine salzbildendes Metallatom, wie ein Alkalimetall, wie Natrium, Kalium oder Lithium, ist.

Formelreste $R^x$ sind beispielsweise: Wasserstoff, Methyl, Ethyl, Propyl, Isopropyl, Butyl, Isobutyl, sek.-Butyl, tert.-Butyl, Carboxymethyl, β-Carboxyethyl, β-Carboxypropyl, Methoxycarbonylmethyl, Ethoxycarbonylmethyl, β-Methoxyethyl, β-Ethoxyethyl, β-Methoxypropyl, β-Chlorethyl, β-Brompropyl, β-Hydroxyethyl, β-Hydroxybutyl, β-Cyanoethyl, Sulfomethyl, β-Sulfoethyl, Amidosulfonylmethyl und β-Sulfatoethyl.
Formelreste $R^z$ sind beispielsweise: Wasserstoff, Methyl, Ethyl, Carboxymethyl, Carbomethoxymethyl, Carbethoxymethyl, Sulfomethyl, Sulfamidomethyl, β-Carboxyethyl, β-Sulfatoethyl, n-Propyl, β-Carboxypropyl, β-Sulfatoethyl, β-Ethoxyethyl, β-Methoxypropyl, β-Chlorpropyl, β-Brompropyl, n-Butyl, Isobutyl, Cyclohexyl, Phenyl, 2-Chlorphenyl, 3-Chlorphenyl, 4-Chlorphenyl, 2- oder 3- oder 4-Sulfophenyl, 2-Methyl-phenyl, 4-Methoxy-phenyl, 3-Methyl-phenyl und 4-Ethylphenyl. Hiervon bevorzugt sind die gegebenenfalls substituierten Alkylgruppen und insbesondere bevorzugt die Methyl- und die Ethylgruppe und das Wasserstoffatom.

In dem Rest V sind Arylenreste bzw. Arylreste bevorzugt Phenylen- und Naphthylenreste bzw. Phenyl-reste, die einen oder mehrere, wie 2 oder 3, bevorzugt 1 oder 2, Substituenten enthalten können, die beispielsweise der Gruppe der Substituenten Alkyl von 1 bis 4 C-Atomen, wie Methyl und Ethyl, Halogen, wie Fluor, Chlor und Brom, Hydroxy, Cyano, Alkoxy von 1 bis 4 C-Atomen, wie Methoxy und Ethoxy, Sulfamoyl, Trifluormethyl und Alkoxycarbonyl von 2 bis 5 C-Atomen, wie Methoxycarbonyl und Ethoxycarbonyl, und erforderlichenfalls der Gruppe der wasserlöslichmachenden Substituenten angehören.

Reste W in der allgemeinen Formel (2) sind beispielsweise:

- $(CH_2)_2SO_2CH_2CH_2OSO_3$,M $-(CH_2)_2SO_2CH_2CH_2Cl$,$-(CH_2)_2O(CH_2)_2SO_2CH=CH_2$, $-(CH_2)_2O(CH_2)_2SO_2CH_2CH_2Cl$, $-(CH_2)_2SO_2CH=CH_2$ worin M die obengenannte Bedeutung hat.

Der Formelrest V ist bevorzugt eine direkte Bindung. Ist V ein Arylenrest, so ist er bevorzugt ein gegebenenfalls sulfosubstituierter Naphthylenrest oder ein Phenylenrest, der durch 1 oder 2 Substituenten aus der Gruppe Alkyl von 1 bis 4 C-Atomen, Alkoxy von 1 bis 4 C-Atomen, Halogen, wie Chlor und Brom, Alkylsulfonyl von 1 bis 4 C-Atomen, Sulfo, Carboxy und Trifluormethyl substituiert sein kann. Ist V ein Alkylenrest, so ist dieser bevorzugt ein Alkylenrest von 2 bis 6 C-Atomen, der gegebenenfalls durch eine oder mehrere der obengenannten Heterogruppen unterbrochen und durch einen oder mehrere der genannten Substituenten substituiert sein kann.

Bevorzugte Reste -V-h- sind: 1,4-Phenylen, 1,3-Phenylen, 1,4-Phenylen-amino, 1,3-Phenylen-amino, 2-Methyl-5-methoxy-1,4-phenylen-4-amino, 4-Chlor-1,3-phenylen-3-amino, 4-Hydroxy-1,3-phenylen-3-amino, 4-Methoxy-1,3-phenylen-3-amino, 2,5-Dimethoxy-1,4-phenylen-4-amino, 4-Carboxy-1,3-phenylen-3-amino und Reste der Formeln

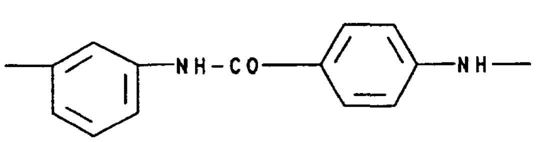 , 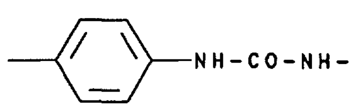 ,

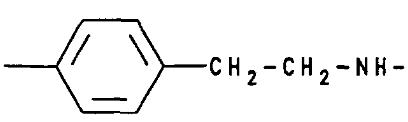 , $-(CH_2)_3-NH-$ , $-(CH_2)_3-NH-CO-$ ,

$-(CH_2)_3-NH-CO-NH-$ und 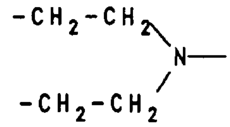 .

Die an den Farbstoffrest F gebundene Gruppierung der Formel (3)

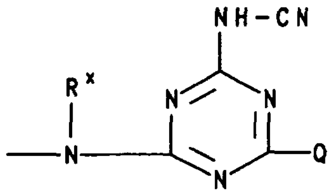

(3)

ist bevorzugt ein Rest der allgemeinen Formel (3a)

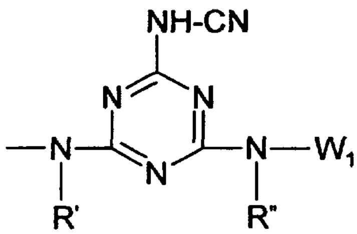

(3a)

in welcher

R' die Methyl- oder Ethylgruppe oder insbesondere ein Wasserstoffatom ist,

R" ein Wasserstoffatom oder die Methyl- oder Ethylgruppe oder 2-Sulfophenyl, 3-Sulfophenyl, 4-Sulfophenyl, 2,4-Disulfophenyl, 2,5-Disulfophenyl, 2-Carboxyphenyl, 4-Carboxyphenyl, Phenyl, 4-Methyl-2-sulfophenyl, 4-Methoxy-2-sulfophenyl, 2-Methyl-1-sulfophenyl, 2-Naphtyl-1,5-disulfonyl, 2- , sowie

$W_1$ Alkylen-$SO_2$-Y, oder Alkylen-Het-Alkylen-$SO_2$-Y, bedeutet.

Wichtige Azofarbstoffe entsprechend der allgemeinen Formel (1) sind solche, in denen F einen Rest eines Farbstoffes der Benzol-azo-naphthol-, der Benzol-azo-1-phenyl-5-pyrazolon-, der Benzol-azo-benzol-, der Naphthalin-azo-benzol-, der Benzol-azo-aminonaphthalin-, der Naphthalin-azo-naphthalin-, der Naphthalin-azo-1-phenyl-5-pyrazolon-, der Benzol-azo-pyridon- und der Naphthalin-azo-pyridon-Reihe bedeutet, wobei auch hier die sulfogruppenhaltigen Farbstoffe bevorzugt sind.

Von den erfindungsgemäßen 1:1-Kupferkomplex-Azofarbstoffen sind diejenigen der Benzol- und Naphthalinreihe bevorzugt.

Bevorzugte Azofarbstoffe der allgemeinen Formel (1) sind beispielsweise solche der allgemeinen Formeln (4a) und (4b)

$$R^G - D_1 - N = N - (E - N = N)_v - K - Z \qquad (4a)$$

$$Z - D_2 - N = N - (E - N = N)_v - K - R^G \qquad (4b)$$

und die davon abgeleiteten Schwermetallkomplex-Verbindungen, wie 1:1-Kupferkomplex-Verbindungen, in welchen

$D_1$ der Rest einer Diazokomponente der Benzol- oder Naphthalinreihe ist,

$D_2$ der Rest einer Diazokomponente der Diaminobenzol- oder Diaminonaphthalin-Reihe ist,
E der Rest einer Mittelkomponente der Benzol- oder Naphthalinreihe bedeutet,
K der Rest einer Kupplungskomponente der Benzol-, Naphthalin-, Pyrazolon-, 6-Hydroxypyridon(2)- oder Acetessigsäurearylamid-Reihe ist,
wobei $D_1$, E und K für Azofarbstoffe übliche Substitutenten, wie beispielsweise Hydroxy-, Amino-, Methyl-, Methoxy-, Ethoxy-, Sulfo-, Carboxy-, gegebenenfalls substituierte Alkanoylaminogruppen von 2 bis 4 C-Atomen im Alkanoylrest, gegebenenfalls substituierte Benzoylaminogruppen und Halogenatome, wie Brom- und Chloratome, enthalten können und $D_1$, E und K zusammen mindestens zwei Sulfogruppen, vorzugsweise drei oder vier Sulfogruppen, besitzen,
v für die Zahl Null oder 1 steht,
Z eine Gruppe der Formel (3) oder bevorzugt der Formel (3a) ist und
$R^G$ eine Gruppe der allgemeinen Formel (5)

$$\left[(Y - SO_2)_z - V\right]_y h - \qquad (5)$$

mit Y, V, h, z und y der obengenannten Bedeutung ist.

Bevorzugt sind weiterhin Azofarbstoffe der allgemeinen Formel (4c) oder (4d)

$$R^G - D_1 - N = N - K^o - N = N - D_2 - Z \qquad (4c)$$

$$Z - D_2 - N = N - K^o - N = N - D_1 - R^G \qquad (4d)$$

in welchen $R^G$ die obengenannte Bedeutung besitzt, $D_1$ und $D_2$ unabhängig voneinander den Rest einer Diazokomponente der Benzol- oder Naphthalinreihe und $K^o$ den Rest einer bivalenten Kupplungskomponente der Naphthalinreihe darstellt, wobei $D_1$, $D_2$ und $K^o$ die für Azofarbstoffe üblichen Substituenten, wie die oben bereits erwähnten, tragen können, wobei $D_1$, $D_2$ und $K^o$ zusammen mindestens zwei Sulfogruppen, vorzugsweise drei oder vier Sulfogruppen, enthalten.

Solche Azofarbstoffe der allgemeinen Formel (1) sind insbesondere Farbstoffe der allgemeinen Formeln (4e), (4f) und (4g)

$$R^G - \left[D - N = N - (E - N = N)_v - K\right] - Z_n \qquad (4e)$$

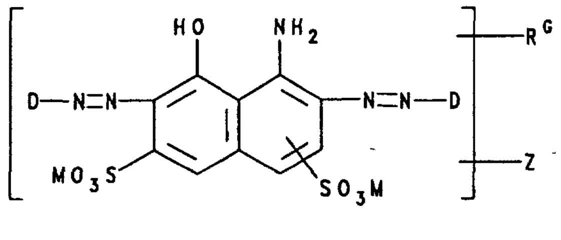

(4f)

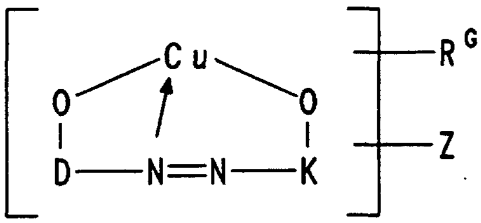

(4g)

in welchen

- $R^G$ eine der obigen Bedeutungen besitzt und an D oder K gebunden ist,
- Z einen Rest der allgemeinen Formel (3) oder (3a) oder (3b) bedeutet,
- n die Zahl 1 oder 2, bevorzugt 1, ist,

der Rest Z an den Rest D oder den Rest K oder im Falle von n = 2 jeweils an D und K bzw. an beide gebunden ist, wobei $R^G$ und Z bevorzugt nicht gleichzeitig an D oder K gebunden sind,

- D jeweils für den Rest einer Diazokomponente, an die noch ein Azorest gebunden sein kann, steht und die zueinander gleiche oder voneinander verschiedene Bedeutungen besitzen können, und beispielsweise einen Rest $D_1$ obiger oder nachstehender Bedeutung darstellt,
- E den bivalenten Rest einer kupplungsfähigen und diazotierbaren Verbindung, beispielsweise obiger oder nachstehender Bedeutung, ist,
- K den Rest einer Kupplungskomponente, an die noch ein Azorest gebunden sein kann, darstellt, beispielsweise obiger oder nachstehender Bedeutung,
- v für die Zahl Null oder 1 steht und
- M ein Wasserstoffatom oder ein Alkalimetall, wie Natrium, Kalium oder Lithium, ist.

Bevorzugte erfindungsgemäße Metallkomplex-Azofarbstoffe sind beispielsweise Kupferkomplex-Azofarbstoffe der allgemeinen Formel (4h)

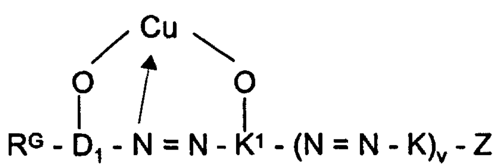

(4h)

in welcher $D_1$, $R^G$, K, v und Z eine der obengenannten Bedeutungen haben und $D_1$ bevorzugt ein nachstehend aus der Formel (5c) oder (5d) ersichtlicher Rest ist, und $K^1$ den Rest einer amino- und hydroxygruppenhaltigen Kupplungskomponente bedeutet, wie bevorzugt der Rest eines gegebenenfalls durch 1 oder 2 Sulfogruppen substituierten Aminonaphthols ist, und wobei die beiden das Kupfer komplex bindenden Oxygruppen in ortho-Stellung bzw. vicinaler Stellung zur Azogruppe an $D_1$ und $K^1$ gebunden sind.

Aromatische Reste von Diazokomponenten, die eine faserreaktive Gruppe der Formel Y-$SO_2$- tragen, wie von solchen der Formeln $R^G$-D-$NH_2$ bzw. $R^G$-$D_1$-$NH_2$, sind beispielsweise solche der allgemeinen Formel (5a), (5b), (5c) und (5d)

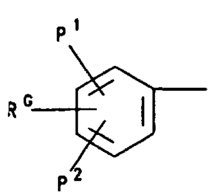

(5a)

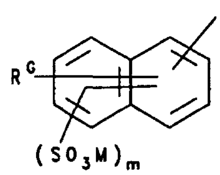

(5b)

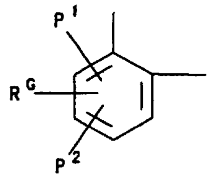 (5c) 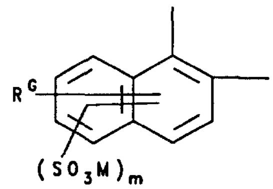 (5d)

in welchen

- $R^G$ einen Rest der Formel (5) bedeutet,
- $P^1$ Wasserstoff, Methyl, Ethyl, Methoxy, Ethoxy, Alkanoyl von 2 bis 5 C-Atomen, wie Acetyl und Propionyl, Cyano, Carboxy, Sulfo, Alkoxycarbonyl von 2 bis 5 C-Atomen, wie Methoxycarbonyl und Ethoxycarbonyl, Carbamoyl, N-($C_1$-$C_4$-Alkyl)-carbamoyl, Fluor, Chlor, Brom oder Trifluormethyl ist,
- $P^2$ Wasserstoff, Methyl, Ethyl, Methoxy, Ethoxy, Cyan, Carboxy, Sulfo, Alkanoylamino von 2 bis 5 C-Atomen, wie Acetylamino, Alkoxycarbonyl von 2 bis 5 C-Atomen, wie Methoxycarbonyl und Ethoxycarbonyl, Carbamoyl, N-($C_1$-$C_4$-Alkyl)-sulfamoyl, Alkylsulfonyl von 1 bis 4 C-Atomen, Phenylsulfonyl oder Phenoxy ist,

wobei der Benzolkern in Formel (5a) und (5b) zusätzlich in ortho-Stellung zur freien Bindung, die an die Azogruppe führt, eine Hydroxygruppe enthalten kann,

- m die Zahl Null, 1 oder 2 bedeutet (wobei diese Gruppe im Falle von p gleich Null ein Wasserstoffatom bedeutet) und
- M die obengenannte Bedeutung hat.

Bevorzugt ist hiervon $P^1$ gleich Wasserstoff, Methyl, Methoxy, Brom, Chlor, Carboxy und Sulfo sowie $P^2$ gleich Wasserstoff, Methyl, Methoxy, Chlor, Carboxy, Sulfo und Acetylamino.

Aromatische Reste von als Diazokomponenten dienenden Diaminobenzol- und Diaminonaphthalin-Verbindungen entsprechend den allgemeinen Formeln $H_2N$-D-$NH_2$ bzw. $H_2N$-$D_2$-$NH_2$ , die den faserreaktiven Rest Z enthalten, sind bevorzugt Reste der allgemeinen Formeln (6a) und (6b)

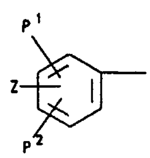 (6a) 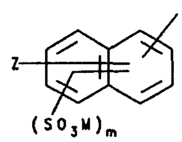 (6b)

in welchen Z, M, m, $P^1$ und $P^2$ die oben angegebenen, insbesondere bevorzugten Bedeutungen haben, wobei der Benzolkern in Formeln (6a) und (6b) zusätzlich in ortho-Stellung zur freien Bindung, die zur Azogruppe führt, eine Hydroxygruppe enthalten kann.

Aromatische Reste E einer kupplungsfähigen und diazotierbaren Verbindung der allgemeinen Formel H-E-$NH_2$ sind beispielsweise solche der allgemeinen Formeln (7a), (7b) und (7c)

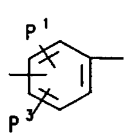 (7a) 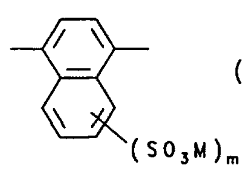 (7b) 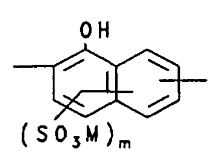 (7c)

in welchen

- $P^1$, M und m die oben angegebenen Bedeutungen haben und
- $P^3$ Wasserstoff, Alkyl von 1 bis 4 C-Atomen, wie Methyl oder Ethyl, Alkoxy von 1 bis 4 C-Atomen, wie Methoxy und

Ethoxy, Chlor, Alkanoylamino von 2 bis 5 C-Atomen, wie Acetylamino und Propionylamino, Benzoylamino, Ureido, Phenylureido, Alkylureido mit 1 bis 4 C-Atomen im Alkylrest, Phenylsulfonyl oder Alkylsulfonyl von 1 bis 4 C-Atomen ist.

Reste -K-$R^G$ von Kupplungskomponenten der allgemeinen Formel H-K-$R^G$, die die faserreaktive Gruppe der Formel -$SO_2$-Y tragen, sind beispielsweise solche der allgemeinen Formeln (8a) bis (8h)

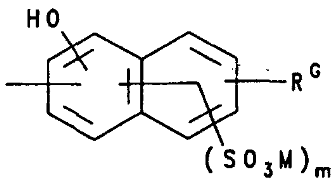
(8a)

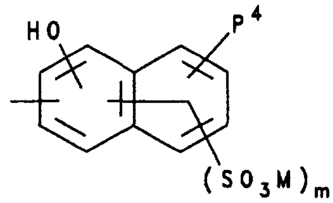
(8b)

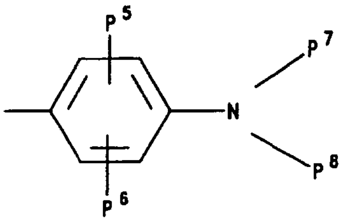
(8c)

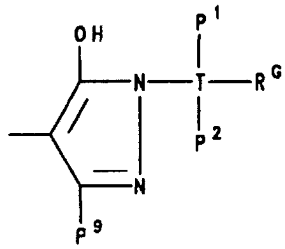
(8d)

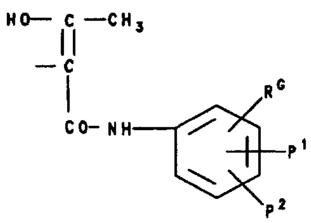
(8e)

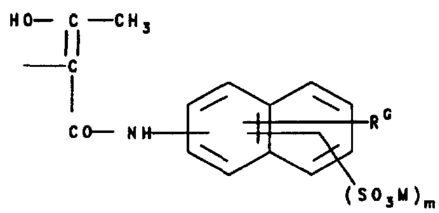
(8f)

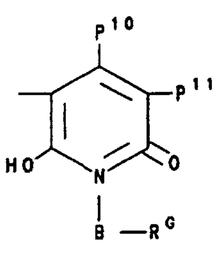
(8gh)

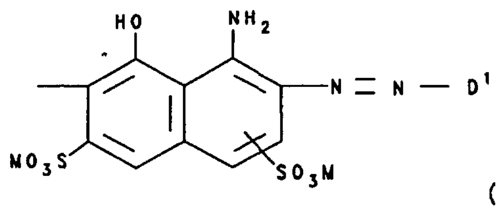
(8h)

in welchen

$R^G$, $P^1$, $P^2$, m und M die obengenannten Bedeutungen haben,

$P^4$ Phenylureido ist, das im Phenylrest durch Chlor, Methyl, Methoxy, Sulfo und/oder Carboxy und durch eine Gruppe -$SO_2$-Y mit Y der obigen Bedeutung substituiert ist, oder Benzoylamino ist, das im Benzolrest durch Chlor, Methyl, Methoxy, Nitro, Sulfo und/oder Carboxy und durch eine Gruppe - $SO_2$-Y mit Y der obigen Bedeutung substituiert ist,

$P^5$ Wasserstoff, Alkyl von 1 bis 4 C-Atomen, wie Methyl und Ethyl, Alkoxy von 1 bis 4 C-Atomen, wie Methoxy und Ethoxy, Brom, Chlor oder Alkanoylamino von 2 bis 7 C-Atomen, wie Acetylamino und Propionylamino, ist,

$P^6$ Wasserstoff, Alkyl von 1 bis 4 C-Atomen, wie Methyl und Ethyl, Alkoxy von 1 bis 4 C-Atomen, wie Methoxy und

Ethoxy, Chlor oder Alkanoylamino von 2 bis 7 C-Atomen, wie Acetylamino und Propionylamino, Ureido oder Phenylureido ist,

$P^7$ Wasserstofff oder Alkyl von 1 bis 4 C-Atomen ist, das durch Hydroxy, Cyano, Carboxy, Sulfo, Sulfato, Methoxycarbonyl, Ethoxycarbonyl oder Acetoxy oder eine Gruppe $-SO_2-Y$ obiger Definition substituiert sein kann,

$P^8$ Alkyl von 1 bis 4 C-Atomen ist, das durch Hydroxy, Cyan, Carboxy, Sulfo, Sulfato, Methoxycarbonyl, Ethoxycarbonyl oder Acetoxy substituiert sein kann und durch eine Gruppe $-SO_2-Y$ obiger Definition substituiert ist, oder Benzyl oder Phenyl oder durch Alkyl von 1 bis 4 C-Atomen, Alkoxy von 1 bis 4 C-Atomen, Chlor und/oder Sulfo substituiertes Phenyl ist, wobei jeweils der Phenylrest durch eine Gruppe $-SO_2-Y$ obiger Definition substituiert ist,

$P^9$ Wasserstoff, Alkyl von 1 bis 4 C-Atomen, wie Methyl, Cyano, Carboxy, Carbalkoxy von 2 bis 5 C-Atomen, wie Carbomethoxy und Carbethoxy, Carbamoyl oder Phenyl, bevorzugt Methyl, Carboxy, Methoxycarbonyl, Ethoxycarbonyl oder Phenyl und insbesondere Methyl oder Carboxy, ist

T für einen Benzol- oder Naphthalinring, bevorzugt Benzolring, steht,

$P^{10}$ Wasserstoff oder Alkyl von 1 bis 4 C-Atomen, wie Methyl, oder durch Alkoxy von 1 bis 4 C-Atomen, wie Methoxy, oder Cyano substituiertes Alkyl von 1 bis 4 C-Atomen ist, bevorzugt Alkyl von 1 bis 4 C-Atomen oder Phenyl ist,

$P^{11}$ Wasserstoff, Chlor, Brom, Sulfo, Carbamoyl, Methylsulfonyl, Phenylsulfonyl, Cyano oder Sulfoalkyl von 1 bis 4 C-Atomen bedeutet, bevorzugt Wasserstoff, Sulfo, Sulfoalkyl mit einem Alkylrest von 1 bis 4 C-Atomen, wie Sulfomethyl, Cyano oder Carbamoyl ist,

B Alkylen von 1 bis 4 C-Atomen, Methylenphenylen, Ethylenphenylen, Phenylenmethylen, Phenylenethylen oder Phenylen oder im Benzolrest durch Fluor, Chlor, Brom, Methyl, Methoxy, Cyano, Sulfo, Carboxy, Acetyl, Nitro, Carbamoyl und/oder Sulfamoyl substituiertes Methylenphenylen, Ethylenphenylen oder Phenylen ist und

$D^1$ ein Rest der allgemeinen Formel (5a) oder (5b) ist.

Reste -K-Z von Kupplungskomponenten der allgemeinen Formel H-K-Z bzw.

H-K-N($R^x$)H sind beispielsweise Reste der allgemeinen Formeln (9a) bis (9h)

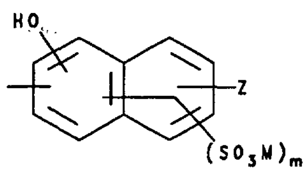
(9a)

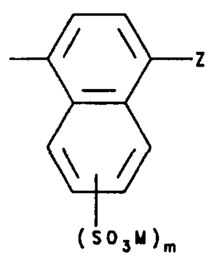
(9b)

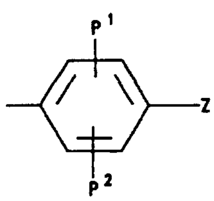
(9c)

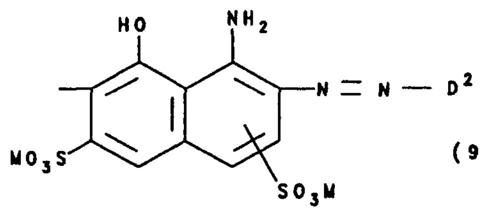
(9d)

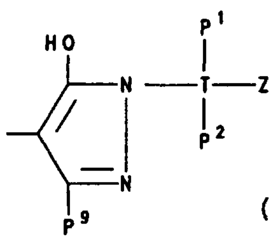
(9e)

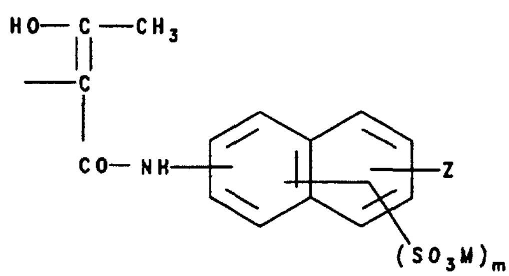
(9f)

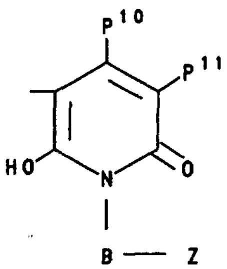

(9g)

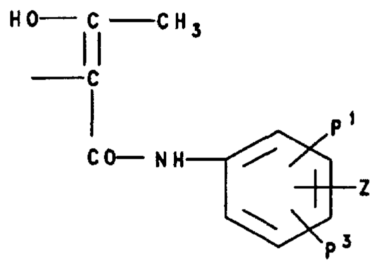

(9h)

in welchen

R, $P^1$, $P^2$, $P^9$, $P^{10}$, $P^{11}$, B, T, M, m und Z die oben angegebenen, insbesondere bevorzugten, Bedeutungen haben und

$D^2$ als Rest einer Diazokomponente ein Rest der obengenannten und definierten allgemeinen Formel (6a) oder (6b) ist.

In den obigen Formeln (8a), (8b) und (9a) steht die freie Bindung, die zur Azogruppe führt, in ortho-Stellung zur Hydroxygruppe an den aromatischen Kern gebunden.

Reste K bzw. $K^1$ in den Formeln (4g) und (4h) mit einem metallkomplex-bindenden Sauerstoffatom, die die Gruppe Z enthalten, sind insbesondere solche der Formeln (10a) bis (10e)

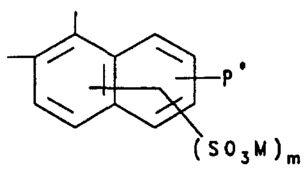

(10a)

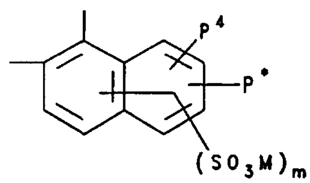

(10b)

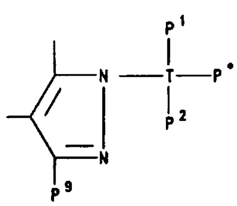

(10c)

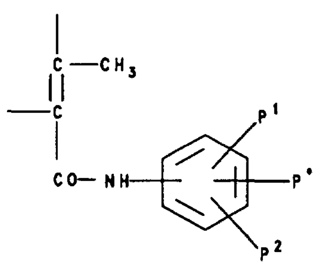

(10d)

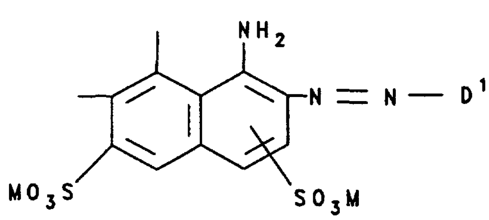

(10e)

in welchen die einzelnen Formelglieder eine der obengenannten Bedeutungen haben und P* entweder einen Rest Z oder eine Gruppierung der Formel -N=N-K-Z bedeutet.

Gruppen der allgemeinen Formel (5a) und (5b) sind beispielsweise:

2-(β-Sulfatoethylsulfonyl)-phenyl, 3-(β-Sulfatoethylsulfonyl)-phenyl, 4-(β-Sulfatoethylsulfonyl)-phenyl, 2-Carboxy-5-(β-sulfatoethylsulfonyl)-phenyl, 2-Chlor-3-(sulfatoethylsulfonyl)-phenyl, 2-Chlor-4-(β-sulfatoethylsulfonyl)-phenyl, 2-Ethoxy-4- oder -5-(β-sulfatoethylsulfonyl)-phenyl, 2-Ethyl-4-(β-sulfatoethylsulfonyl)-phenyl, 2-Methoxy-5- oder -4-(β-sulfatoethylsulfonyl)-phenyl, 2,4-Diethoxy-5-(β-sulfatoethylsulfonyl)-phenyl, 2,4-Dimethoxy-5-(β-sulfatoethylsulfonyl)-phenyl, 2,5-Dimethoxy-4-(β-sulfatoethylsulfonyl)-phenyl, 2-Methoxy-5-methyl-4-(β-sulfatoethylsulfonyl)-phenyl, 2- oder 3- oder 4-(β-Thiosulfatoethylsulfonyl)-phenyl, 2-Methoxy-5-(β-thiosulfatoethylsulfonyl)-phenyl, 2-Sulfo-4-(β-phosphatoethylsulfonyl)-phenyl, 2-Sulfo-4-vinylsulfonyl-phenyl, 2-Hydroxy-4- oder -5-(β-sulfatoethylsulfonyl)-phenyl, 2-Chlor-4- oder -5-(β-chlorethylsulfonyl)-phenyl, 2-Hydroxy-3-sulfo-5-(β-sulfatoethylsulfonyl)-phenyl, 3- oder 4-(β-Acetoxyethylsulfonylphenyl phenyl, 5-(β-Sulfatoethylsulfonyl)-naphth-2-yl, 6- oder 7- oder 8-(β-Sulfatoethylsulfonyl)-naphth-2-yl, 6-(β-Sulfatoethylsulfonyl)-1-sulfo-naphth-2-yl, 5-(β-Sulfatoethylsulfonyl)-1-sulfo-naphth-2-yl, 8-(β-Sulfatoethylsulfonyl)-6-sulfo-naphth-2-yl, 3- oder 4-{β-[4-(β'-Sulfatoethylsulfonyl)-phen]-ethylamino}-phenyl, 3- oder 4-{β-[2-Sulfo-4-(β'-sulfatoethylsulfonyl)-phen]-ethylamino}-phenyl, 3- oder 4-[β-(β'-Chlorethylsulfonyl)-ethylamino]-phenyl, 3- oder 4-[β-(β'-Sulfatoethylsulfonyl)-ethylamino]-phenyl, 3- oder 4-[β-(Vinylsulfonyl)-ethylamino]-phenyl, 3- oder 4-[(-(β' 3,4-Di-(β-sulfatoethylsulfonyl)-phenyl, 2,5-Di-(β-sulfatoethylsulfonyl)-phenyl, 2,5-Bis-[(β-sulfatoethylsulfonyl)-methyl]-phenyl,

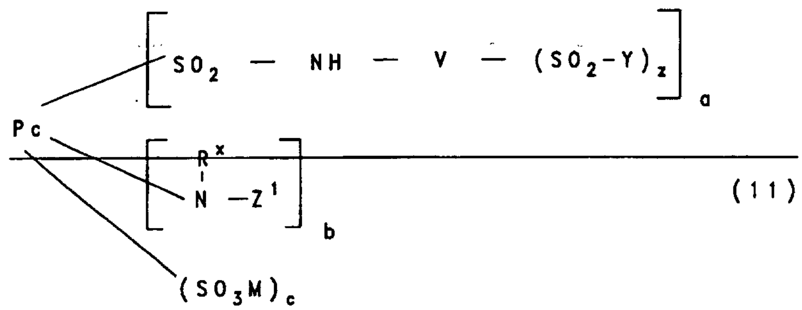

(11)

Von den Azofarbstoffen sind weiterhin bevorzugt solche, die den allgemeinen Formeln (12A) bis (12V)

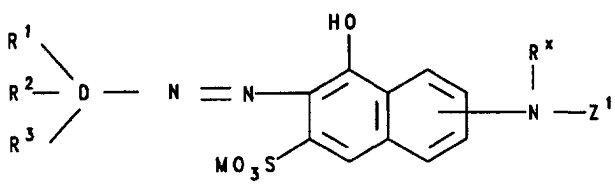

(12A)

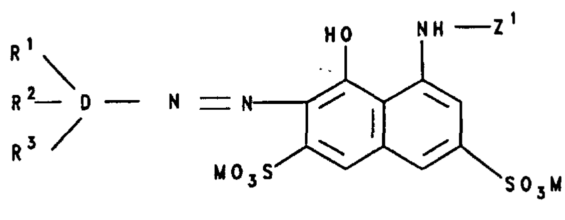

(12B)

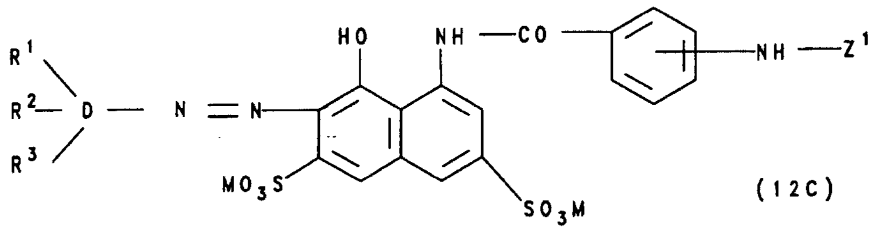

(12C)

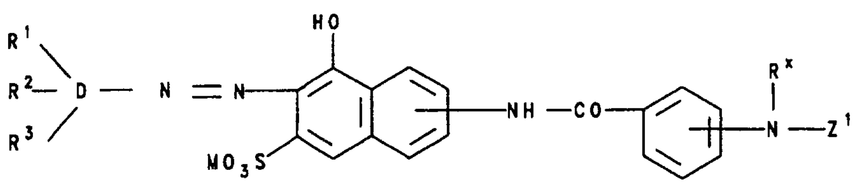

(12D)

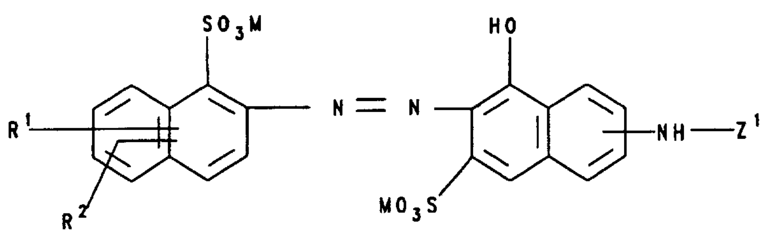

(12E)

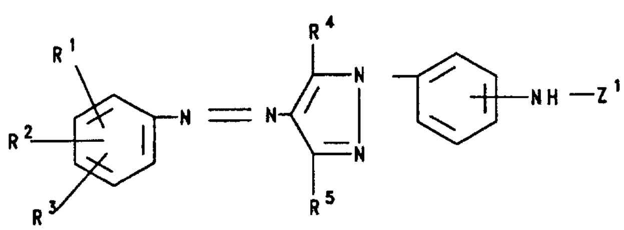

(12F)

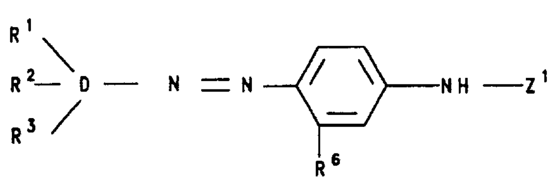

(12G)

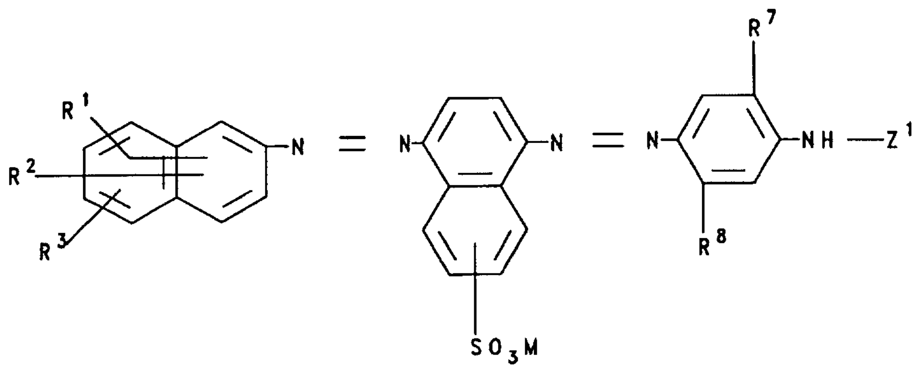

(12H)

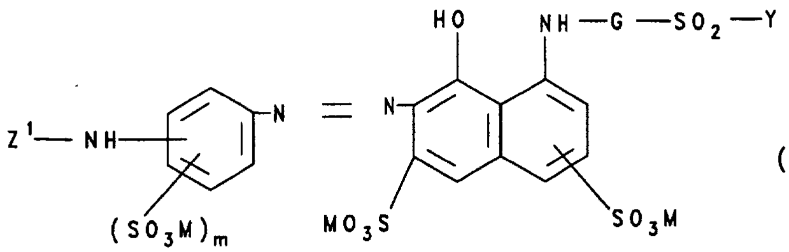

(12J)

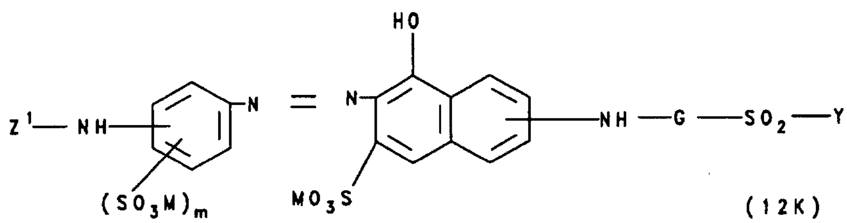

(12K)

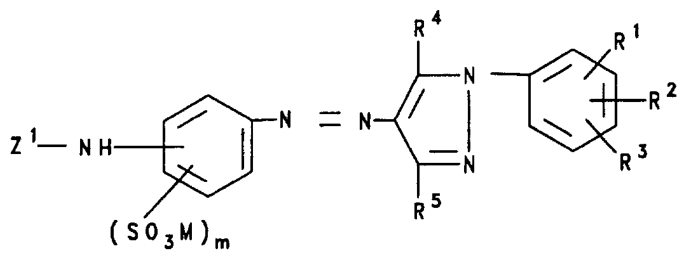

(12L)

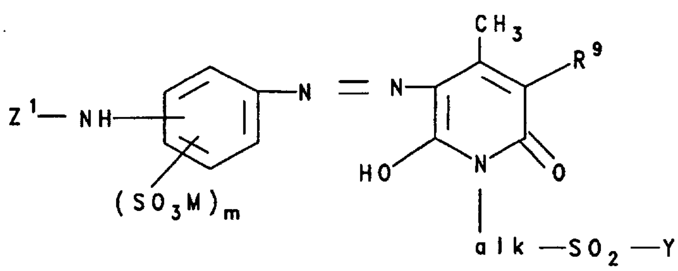

(12M)

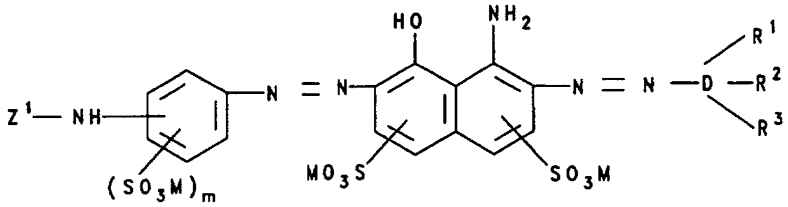

(12N)

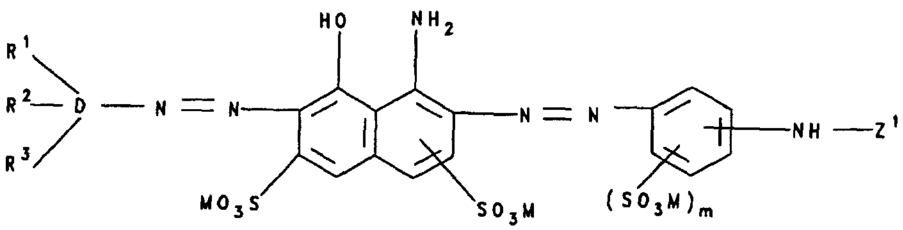

(12P)

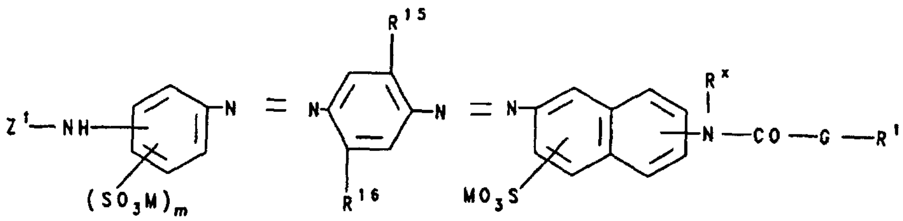

(12Q)

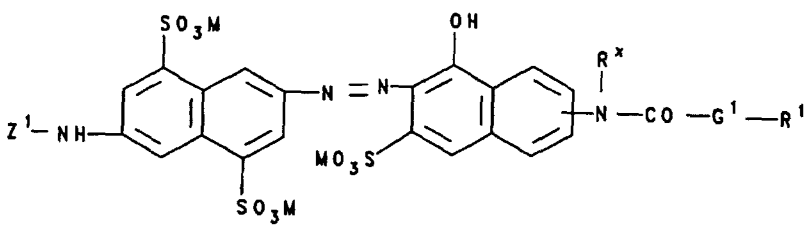

(12R)

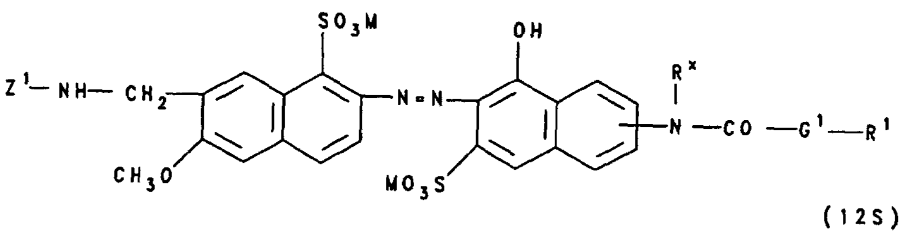

(12S)

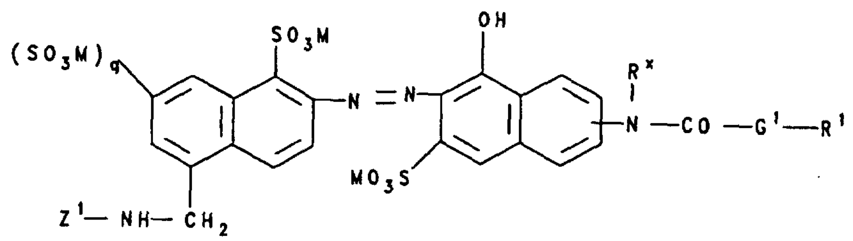

(12T)

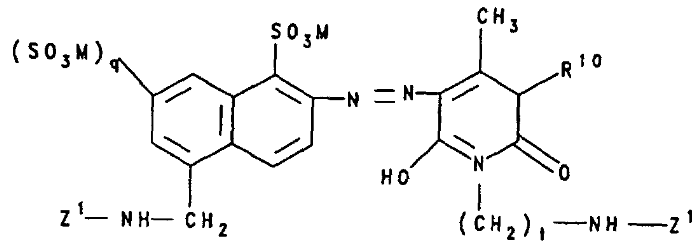

(12U)

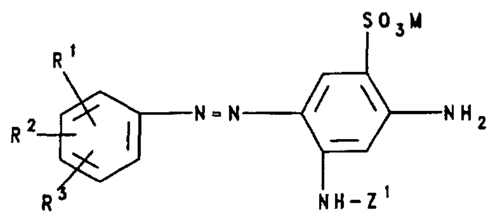

(12V)

entsprechen, in welchen bedeuten:

- $Z^1$ ist ein Rest der Formel (3) oder bevorzugt (3a)
- M hat eine der obengenannten Bedeutungen;
- $R^x$ ist Wasserstoff oder Alkyl von 1 bis 4 C-Atomen, wie Methyl oder Ethyl;
- D ist ein Benzolring oder ist ein Naphthalinring, wobei die Azogruppe an den Naphthalinring bevorzugt in 8-Stellung gebunden ist und wobei im Falle, daß D den Naphthalinring bedeutet, $R^2$ und $R^3$ bevorzugt jedes, unabhängig voneinander, ein Wasserstoffatom oder eine Sulfogruppe bedeuten;
- $R^1$ ist β-Sulfatoethylsulfonyl, β-Chlorethylsulfonyl oder Vinylsulfonyl;
- $R^2$ ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Halogen, wie Chlor und Brom, Carboxy, Sulfo, oder eine Gruppe der Formel $-SO_2-Y$ mit Y der obengenannten Bedeutung, wie β-Sulfatoethylsulfonyl, β-Chlorethylsulfonyl oder Vinylsulfonyl und ist bevorzugt Wasserstoff;
- $R^3$ ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Halogen, wie Chlor und Brom, Carboxy oder Sulfo, bevorzugt Wasserstoff;
- $R^4$ ist Hydroxy oder Amino, bevorzugt Hydroxy;
- $R^5$ ist Methyl, Carboxy, Carbomethoxy oder Carbethoxy, bevorzugt Methyl oder Carboxy;
- $R^6$ ist Acetylamino, Ureido oder Methyl;
- $R^7$ ist Wasserstoff, Alkyl von 1 bis 4 C-Atomen, wie Methyl und Ethyl, Alkoxy von 1 bis 4 C-Atomen, wie Methoxy und Ethoxy, Halogen, wie Brom und insbesondere Chlor, vorzugsweise Wasserstoff, Methyl, Ethyl, Methoxy, Ethoxy oder Chlor;
- $R^8$ ist Wasserstoff oder Alkyl von 1 bis 4 C-Atomen, wie Methyl und Ethyl, Alkanoylamino von 2 bis 5 C-Atomen, wie Acetylamino und Propionylamino, oder Ureido, vorzugsweise Wasserstoff, Methyl, Ethyl, Methoxy, Ethoxy, Acetylamino oder Ureido;
- $R^9$ ist Wasserstoff, Cyano, Carbamoyl, Sulfamoyl oder Sulfomethyl, bevorzugt Wasserstoff oder Carbamoyl;

$R^{10}$ ist Cyano, Carbamoyl oder Sulfomethyl;
alk ist Alkylen von 2 bis 4 C-Atomen, vorzugsweise Ethylen;
G ist Alkylen von 2 bis 4 C-Atomen, vorzugsweise n-Ethylen oder insbesondere n-Propylen, oder ist Carbonylphenylen;
$G^1$ ist Phenylen oder ist ein Rest der Formel $-NH-(CH_2)_3-$;
m ist die Zahl Null, 1 oder 2 (wobei im Falle von m gleich Null diese Gruppe Wasserstoff ist);
q steht für die Zahl Null oder 1 (wobei im Falle von q gleich Null diese Gruppe Wasserstoff bedeutet);
t steht für die Zahl 2 oder 3;

in den Verbindungen der Formeln (12A), (12D), (12E), (12K) und (12Q) bis (12T) steht die Aminogruppierung mit dem faserreaktiven Rest in 2- oder 3-Stellung an den 8-Naphthol-Rest gebunden.

Amine der allgemeinen Formel H-Q sind beispielsweise:

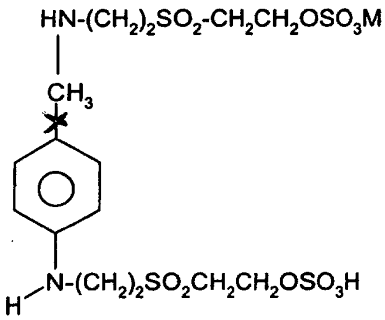

$H_2N-(CH_2)_2O(CH_2)_2SO_2CH_2CH_2Cl$    $H_2N(CH_2)_2SO_2CH_2CH_2Cl$

sowie 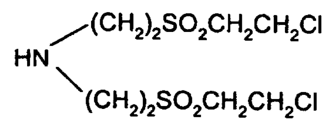

wobei M die obengenannte Bedeutung hat.

Die vorliegende Erfindung betrifft weiterhin Verfahren zur Herstellung der erfindungsgemäßen Farbstoffe der allgemeinen Formel (1). Sie lassen sich in an und für sich in üblicher Weise analog bekannten, für die jeweiligen Farbstoffklasse spezifischen Synthesewegen herstellen, indem man für den jeweiligen Farbstoff typische Vorprodukte, von denen mindestens eines eine Gruppe der allgemeinen Formel (3) und mindestens eines eine Gruppe der allgemeinen Formel (5) enthält, miteinander umsetzt, oder indem man von einer aminogruppenhaltigen Ausgangsverbindung der allgemeinen Formel (55)

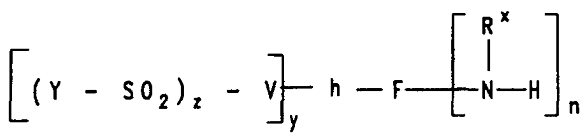

(55)

in welcher F, $R^x$ und n die obengenannten Bedeutungen haben, ausgeht und diese mit einem Trihalogen-s-triazin, der allgemeinen Formel (56)

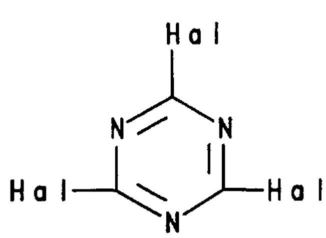

(56)

in welcher Hal für ein Halogenatom, wie insbesondere Chlor- oder Fluoratom, steht mit Cyanamid oder einem Alkalimetallsalz davon und mit einem Amin der allgemeinen Formel H-Q mit Q der obengenannten Bedeutung in stöchiometrischen Mengen in beliebiger Reihenfolge miteinander umsetzt und gegebenenfalls anschließend weitere, dem Fachmann geläufige, erforderliche Umwandlungsreaktionen durchführt.

Insbesondere lassen sich die erfindungsgemäßen Farbstoffe erfindungsgemäß herstellen, indem man eine Verbindung entsprechend der allgemeinen Formel (57)

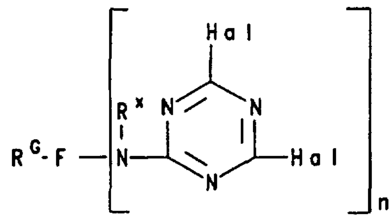

(57)

in welcher $R^G$, F, $R^x$ und n die obengenannte Bedeutungen haben und Hal für ein Halogenatom, wie insbesondere ein Chlor- oder Fluoratom, steht, mit Cyanamid oder einem Alkalimetallsalz davon umsetzt und die so erhaltene Verbindung der allgemeinen Formel (58)

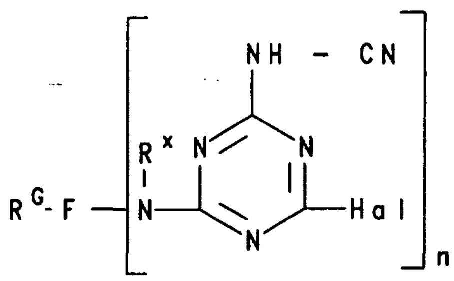

(58)

in welcher $R^G$, F, $R^x$ und Hal die obengenannten Bedeutungen haben, mit einem Amin der allgemeinen Formel H-Q mit Q der obengenannten Bedeutung umsetzt, oder indem man eine Verbindung der allgemeinen Formel (59)

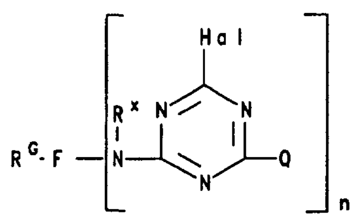

(59)

in welcher $R^G$, F, $R^x$, Hal, Q und n die obengenannten Bedeutungen haben, mit Cyanamid oder einem Alkalimetallsalz davon umsetzt, oder indem man eine Verbindung der allgemeinen Formel (55) mit einer Verbindung der allgemeinen Formel (60)

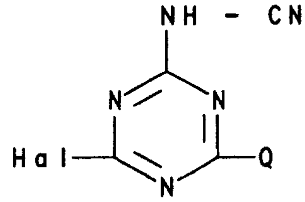

(60)

mit Hal und Q der obengenannten Bedeutung umsetzt.

Die Umsetzungen der Ausgangsverbindungen erfolgen im wäßrigen oder wäßrig-organischen Medium in Suspension oder Lösung. Führt man die Umsetzungen in einem wäßrig-organischen Medium durch, so ist das organische Medium beispielsweise Aceton, Dimethylformamid und N-Methyl-pyrrolidon. Vorteilhaft wird der bei der Kondensation

freiwerdende Halogenwasserstoff laufend durch Zugabe wäßriger Alkalihydroxide, -carbonate oder -bicarbonate neutralisiert.

Die Umsetzung der Ausgangsverbindungen der allgemeinen Formel (58) mit dem Amin der allgemeinen Formel H-Q erfolgt bei einer Temperatur zwischen 30 und 100°C, vorzugsweise zwischen 65 und 85°C, und bei einem pH-Wert zwischen 3 und 11,5, vorzugsweise zwischen 3,5 und 7, und die Umsetzung der Verbindung der Formel (55) mit der Verbindung der allgemeinen Formel (60) vorzugsweise bei einer Temperatur zwischen 25 und 90°C, insbesondere zwischen 45 und 75°C, und bei einem pH-Wert zwischen 3 und 11,5, insbesondere zwischen 3,5 und 6,5.

Verbindungen der allgemeinen Formel (58) lassen sich außer der Umsetzung einer Verbindung der Formel (57) mit Cyanamid auch so herstellen, daß man, analog bekannten Verfahrensweisen, ein entsprechendes 2,4-Dihalogeno-6-cyanamido-striazin mit einer Ausgangsverbindung der allgemeinen Formel (55) umsetzt oder, ebenfalls analog bekannten Verfahrensweisen, durch Reaktion eines für den Farbstofftyp üblichen Farbstoffvorproduktes, das jedoch eine Gruppe der allgemeinen Formel (61)

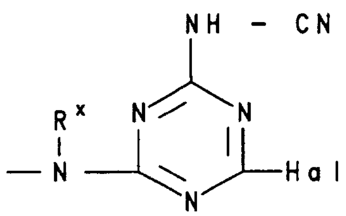

(61)

enthält, in welcher $R^x$ und Hal die obengenannten Bedeutungen haben, mit einem weiteren, eine Gruppe der Formel (5) enthaltendem Vorprodukt.

Ein bevorzugtes Verfahren ist die Umsetzung eines Halogentriazins der allgemeinen Formel (56), bevorzugt Trichlortriazin, mit Cyanamid und anschließende Kondensation mit einem Amin der Formal HQ zu einem Produkt der allgemeinen Formel (60).

Dabei erfolgt die Reaktion mit dem Amin HQ bei 0 bis 60, bevorzugt bei 10 bis 40°C und pH-Werten zwischen 4 und 9, bevorzugt 5 und 8.

Anschließend erfolgt die Umsetzung mit einem Amin der allgemeinen Formel (55) bei 20 bis 90 °C, bevorzugt 30 bis 70°C und pH Werten von 2 bis 6, bervorzugt von 3 bis 6.

Alternativ kann auch statt des Amins der allgemeinen Formel (55) ein Farbstoffvorprodukt F' ankondensiert werden, wenn der Endfarbstoff danach durch Kupplung hergestellt wird.

Das Amin der Formel H-Q wird in der Regel in Form eines Salzes, wie eines Sulfats oder eines inneren Salzes in Form des Hydrochlorids, in die Umsetzungen eingesetzt.

Geht man bei der erfindungsgemäßen Synthese der Azofarbstoffe von Diazo- und Kupplungskomponenten aus, die die Gruppen der allgemeinen Formeln (3) und (5) enthalten, erfolgen die Umsetzungen in der üblichen Verfahrensweise der Diazotierungs- und Kupplungsreaktionen, so die Diazotierung in der Regel bei einer Temperatur zwischen -5°C und +15°C und einem pH-Wert unterhalb von 2 mittels einer starken Säure und Alkalinitrit in bevorzugt wäßrigem Medium und die Kupplungsreaktion in der Regel bei einem pH-Wert zwischen 1,5 und 4,5 im Falle einer aminogruppenhaltigen Kupplungskomponente und bei einem pH-Wert zwischen 3 und 7,5 im Falle einer hydroxygruppenhaltigen Kupplungskomponente und bei einer Temperatur zwischen 0 und 25°C, ebenso bevorzugt in wäßrigem Medium.

Bei der erfindungsgemäßen Synthese von Schwermetallkomplex-Azofarbstoffen, beispielsweise solchen entsprechend der allgemeinen Formel (4h), geht man in der Regel von solchen schwermetallfreien Azoverbindungen aus, die in der Kupplungskomponente eine phenolische oder naphtholische Hydroxygruppe in ortho-Stellung bzw. vicinaler Stellung zur Azogruppe gebunden enthalten und deren Diazokomponentenrest in ortho-Stellung zur Azogruppe ein Wasserstoffatom oder eine Hydroxygruppe oder eine niedere Alkoxygruppe, wie Methoxygruppe, gebunden enthält, wobei die schwermetallfreien Ausgangs-Azoverbindungen zudem einen Acylaminorest gebunden enthalten können, wie einen Acetylaminorest. Beispielsweise kann man bei der Synthese der Kupferkomplex-Azofarbstoffe der Formel (4h) von einer Ausgangsverbindung entsprechend der allgemeinen Formel (62)

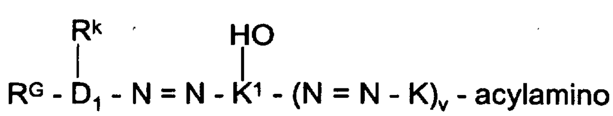

(62)

ausgehen, in welcher $D_1$, K, $K^1$ und v eine der obengenannten Bedeutungen haben und $R^k$ ein Wasserstoffatom oder eine in ortho-Stellung zur Azogruppe an $D_1$ gebundene Hydroxy- oder Methoxygruppe ist, und diese acylaminogruppenhaltige Ausgangs-Azoverbindung analog bekannten und üblichen Verfahrensweisen mit einem kupferabgebenden Mittel, wie einem Kupfersalz, umsetzen. Ist $R^k$ ein Wasserstoffatom oder eine Methoxygruppe, so kann man die Verbindung (62) einer auf üblichen Wege durchzuführenden oxidativen oder entalkylierenden Kupferungsreaktion unterwerfen. Die nun erhaltene Kupferkomplex-Azoverbindung mit der Acylaminogruppe kann sodann analog bekannten Verfahrensweisen nach oder unter Hydrolyse der Acylaminogruppe zur Aminogruppe mit einem Cyanurhalogenid bzw. einer Verbindung der Formel (60) zu dem erfindungsgemäßen Farbstoff der allgemeinen Formel (1) umgesetzt werden.

Ausgangsverbindungen mit einer faserreaktiven Gruppierung $R^G$, die als Diazokomponenten dienen können, sind beispielsweise:
2-(β-Sulfatoethylsulfonyl)-anilin, 3-(β-Sulfatoethylsulfonyl)-anilin, 4-(β-Sulfatoethylsulfonyl)-anilin, 2-Carboxy-5-(β-sulfatoethylsulfonyl)-anilin, 2-Chlor-3-(sulfatoethylsulfonyl)-anilin, 2-Chlor-4-(β-sulfatoethylsulfonyl)-anilin, 2-Ethoxy-4-oder -5-(β-sulfatoethylsulfonyl)-anilin, 2-Ethyl-4-(β-sulfatoethylsulfonyl)-anilin, 2-Methoxy-5- oder -4-(β-sulfatoethylsulfonyl)-anilin, 2,4-Diethoxy-5-(β-sulfatoethylsulfonyl)-anilin, 2,4-Dimethoxy-5-(β-sulfatoethylsulfonyl)-anilin, 2,5-Dimethoxy-4-(β-sulfatoethylsulfonyl)-anilin, 2-Methoxy-5-methyl-4-(β-sulfatoethylsulfonyl)-anilin, 2- oder 3- oder 4-(β-Thiosulfatoethylsulfonyl)-anilin, 2-Methoxy-5-(β-thiosulfatoethylsulfonyl)-anilin, 2-Sulfo-4-(β-phosphatoethylsulfonyl)-anilin, 2-Sulfo-4-vinylsulfonyl-anilin, 2-Hydroxy-4- oder -5-(β-sulfatoethylsulfonyl)-anilin, 2-Chlor-4- oder -5-(β-chlorethylsulfonyl)-anilin, 2-Hydroxy-3-sulfo-5-(β-sulfatoethylsulfonyl)-anilin, 3- oder 4-(β-Acetoxyethylsulfonyl)-anilin, 5-(β-ethylsulfonyl)-2-amino-naphthalin, 6- oder 7- oder 8-(β-Sulfatoethylsulfonyl)-2-amino-naphthalin, 6-(β-Sulfatoethylsulfonyl)-1-sulfo-2-amino-naphthalin, 5-(β-Sulfatoethyl-sulfonyl)-1-sulfo-2-amino-naphthalin, 8-(β-Sulfatoethylsulfonyl)-6-sulfo-2-amino-naphthalin, 3- oder 4-{β-[4-(β'-Sulfatoethylsulfonyl)-phen]-ethylamino}anilin, 3- oder 4-{β-[2-Sulfo-4-(β'-sulfatoethylsulfonyl)-phen]-ethylamino}-anilin, 3-oder 4-[β-(β'-Chlorethylsulfonyl)-ethylamino]-anilin, 3- oder 4-[β-(β'-Sulfatoethylsulfonyl)-Sulfatoethylsulfonyl)-ethylamino]-anilin, 3- oder 4-[β-(Vinylsulfonyl)-ethylamino]-anilin, 3- oder 4-[(-(β'-Chlorethylsulfonyl)-propylamino]-anilin, 3- oder 4-[(-(β'-Sulfatoethylsulfonyl)-propylamino]-anilin, 3- oder 4-[(-(Vinylsulfonyl)-propylamino]-anilin, 3,4-Di-(β-sulfatoethylsulfonyl)-anilin, 2,5-Di-(β-sulfatoethylsulfonyl)-anilin, 4-[(-(β'-Sulfatoethylsulfonyl)-propoxy]-anilin, 2,5-Bis-[(β-sulfatoethylsulfonyl)-methyl]-anilin, 3- oder 4-{N-[(-(β'-Sulfatoethylsulfonyl)-propyl-amidocarbonyl]}-anilin, 3,5-Bis-{N-[(-(β'-sulfatoethylsulfonyl)-propyl-amidocarbonyl]}-anilin, 3-Sulfo-4-{[N-(-(β'sulfatoethylsulfonyl)-propyl-amidocarbonyl]-methoxy}anilin und 4-{[N-(-(β'-Sulfatoethylsulfonyl)-propyl-amidocarbonyl]-methoxy}-anilin.

Ausgangsverbindungen entsprechend der allgemeinen Formel $H_2N$-D-$NH_2$ bzw. $H_2N$-$D_1$-$NH_2$ sind beispielsweise 1,4-Phenylendiamin, 1,4-Phenylendiamin-2-sulfonsäure, 1,4-Phenylendiamin-2-carbonsäure- 1,4-Diamino-naphthalin-2-sulfonsäure, 2,6-Diamino-naphthalin-8-sulfonsäure, 2,6-Diamino-naphthalin-4,8-disulfonsäure, 1,3-Phenylen-diamin, 1,3-Phenylendiamin-4-sulfonsäure, 1,3-Phenylendiamin-4,6-disulfonsäure, 1,4-Phenylendiamin-2,6-disulfonsäure, 1,4-Phenylendiamin-2,5-disulfonsäure, 1,4-Diamino-naphthalin-6-sulfonsäure, 4,4'-Diamino-diphenyl-3-sulfonsäure und 4,4'-Diamino-stilben-2,2'-disulfonsäure.

Ausgangsverbindungen entsprechend der allgemeinen Formel H-E-$NH_2$, die zur Synthese der erfindungsgemäßen Disazofarbstoffen eingesetzt werden können und als Kupplungskomponente und anschließend an die Kupplung als Diazokomponente dienen, sind beispielsweise Anilin, 3-Methyl-anilin, 2,5-Dimethyl-anilin, 2,5-Dimethoxy-anilin, 3-Methoxy-anilin, 3-Acetylamino-anilin, 3-Propionylamino-anilin, 3-Butyrylamino-anilin, 3-Benzoylamino-anilin, 3-Ureido-anilin, 2-Methyl-5-acetylamino-anilin, 2-Methoxy-5-acetylamino-anilin, 2-Methoxy-5-methyl-anilin, 1-Amino-naphthalin-6-sulfonsäure, 1-Aminonaphthalin-7-sulfonsäure, 2-Sulfo-5-acetylamino-anilin, 2-Amino-5-naphthol-7-sulfonsäure, 2-Amino-8-naphthol-6-sulfonsäure, 2-(4'-Amino-benzoylamino)-5-naphthol-7-sulfonsäure, 1-(4'-Amino-2'-sulfo-phenyl)-3-methyl- oder -3-carboxy-5-pyrazolon und N-(Acetoacetyl)-3-sulfo-4-amino-anilid.

Ausgangsverbindungen, die als Kupplungskomponenten entsprechend der allgemeinen Formel H-K-$R^G$ zur Synthese der erfindungsgemäßen Azofarbstoffe dienen können, sind beispielsweise 1-[4'-(β-Sulfatoethyl-sulfonyl)-phenyl]-3-methyl-5-pyrazolon, 1-[4'-(Vinylsulfonyl)-phenyl]-3-methyl-5-pyrazolon, 1-[4'-(β-Sulfatoethylsulfonyl)-phenyl]-3-carboxy-5-pyrazolon, 1-[3'-[β-Chlorethylsulfonyl)-benzoylamino]-3,6-disulfo-8-naphthol, 1-[3'-(Vinylsulfonyl)-benzoylamino]-3,6-disulfo-8-naphthol, 1-[3'-(Vinylsulfonyl)-benzoylamino]-4,6-disulfo-8-naphthol, 1-[3'-(β-Sulfatoethylsulfonyl)-benzoylamino]-4,6-disulfo-8-naphthol, 2-[3'-(β-Chlorethylsulfonyl)-benzoylamino]-6-sulfo-8-naphthol, 2-[3'-(Vinylsulfonyl)-benzoylamino]-6-sulfo-8-naphthol, 3-[3'-(β-Chlorethylsulfonyl)-benzoylamino]-6-sulfo-8-naphthol, 3-[3'-(Vinylsulfonyl)-benzoyl-amino]-6-sulfo-8-naphthol, 6-Sulfo-1-[3'-(β-chlorethylsulfonyl)-benzoylamino]-naphthol, 7-Sulfo-[3'-(vinylsulfonyl)-benzoylamino]-naphthol, 2-[N-Methyl-N-(β-sulfatoethylsulfonyl)-amino]-6-sulfo-8-naphthol, 3-[N-Methyl-N-(β-sulfatoethylsulfonyl)-amino]-6-sulfo-8-naphthol, 2-[N-Ethyl-N-(β-sulfatoethylsulfonyl)-amino]-6-sulfo-8-naphthol, 1-[N'-(3'-β-Chlorethylsulfonyl-phenyl)-ureido]-3,6-disulfo-8-naphthol, 1-[N'-(3'-Vinylsulfonylphenyl)-ureido]-3,6-disulfo-8-naphthol, 1-[N'-(3'-Vinylsulfonyl-propyl)-ureido]-3,6-disulfo-8-naphthol, 1-[N'-(3'-β-Chlorethylsulfonyl-phenyl)-ureido]-4,6-disulfo-8-naphthol, 1-[N'-(3'-Vinylsulfonyl-phenyl)-ureido]-4,6-disulfo-8-naphthol, 1-[N'-(3'-β-Chlorethylsulfonyl-propyl)-ureido]-4,6-disulfo-8-naphthol, 2-[N'-(3'-β-Sulfatoethylsulfonyl-phenyl)-ureido]-6-sulfo-8-naphthol, 2-[N'-(3'-Chlorethylsulfonylpropyl)-ureido]-6-sulfo-8-naphthol, 3-[N'-(3'-β-Chlorethylsulfonyl-phenyl)-ureido]-6-sulfo-8-naphthol, 3-[N'-(3'-Vinylsulfonyl-propyl)-ureido]-6-sulfo-8-naphthol, 2-Sulfo-5-[N'-(3"-β-chlorethylsulfonyl)-phenyl]-ureido-anilin, 3-[N'-(3"-β-Sulfatoethylsulfonyl)-phenyl]-ureido-anilin und 6-Sulfo-1-[N'-(3"-β-Sulfatoethylsulfonyl)-phenyl]-ureido-8-naphthol.

Kupplungskomponenten entsprechend der allgemeinen Formel H-K-N($R^x$)H , die zum Aufbau der erfindungsgemäßen Azofarbstoffe dienen können, in welchen der faserreaktive Rest Z in der Kupplungskomponente enthalten ist, wobei bei dem zunächst erhaltenen aminogruppenhaltigen Azofarbstoff entsprechend der allgemeinen Formel (55) in dessen Aminogruppe -N($R^x$)H der faserreaktive Rest $Z^1$ oder ein anderer vorgenannter Halogentriazinrest anschließend eingeführt werden kann bzw. wird, sind beispielsweise Anilin, 3-Methyl-anilin, 2,5-Dimethyl-anilin, 2,5-Dimethoxy-anilin, 3-Methoxy-anilin, 3-Acetylamino-anilin, 3-Propionylamino-anilin, 3-Butyrylamino-anilin, 3-Benzoylamino-anilin, 3-(Hydroxyacetylamino)-anilin, 3-Ureido-anilin, 2-Methyl-5-acetylamino-anilin, 2-Methoxy-5-acetylamino-anilin, 2-Methoxy-5-methyl-anilin, 1-Amino-naphthalin-6-sulfonsäure, 1-Amino-naphthalin-7-sulfonsäure, 4-Sulfo-1,3-diaminobenzol, 6-Sulfo-2-methoxy-1-amino-naphthalin, 5,7-Disulfo-2-aminonaphthalin, 1-Amino-8-hydroxy-naphthalin-4-sulfonsäure, 1-Amino-8-hydroxynaphthalin-6-sulfonsäure, 1-Amino-8-hydroxynaphthalin-2,4-disulfonsäure, 1-Amino-8-naphthol-3,6-disulfonsure, 1-Amino-8-hydroxy-4,6-disulfonsäure, 1-Amino-8-hydroxy-naphthalin-2,4,6-trisulfonsäure, 2-(Methylamino)-und 2-(Ethylamino)-5-hydroxynaphthalin-7-sulfonsäure, 2-Amino-5-hydroxynaphthalin-1,7-disulfonsäure, 2-(Methylamino)- und 2-(Ethylamino)-8-hydroxynaphthalin-6-sulfonsäure, 2-Amino-8-hydroxynaphthalin-3,6-disulfonsäure, 2-(4'-Amino-3'-sulfophenylamino)-5-hydroxynaphthalin-7-sulfonsäure, 1-Amino-8-hydroxy-2-(phenylazo)-naphthalin-3,6-disulfonsäure, 1-Amino-8-hydroxy-2-(4'sulfophenylazo)-naphthalin-3,6-disulfonsäure, 1-Amino-8-hydroxy-2-(2',5'disulfophenylazo)-naphthalin-3,6-disulfonsäure, 1-(β-Aminoethyl)-3-cyano-4-methyl-6-hydroxy-pyrid-2-on, 1-(-Aminopropyl)-3-sulfomethyl-4-methyl-6-hydroxy-pyrid-2-on, 1,3-Diaminobenzol, 3-[N,N-Di-(β-hydroxyethyl)]-amino-anilin, 3-[N,N-Di-(β-sulfatoethyl)]-amino-4-methoxy-anilin, 3-(Sulfo-benzylamino)-anilin, 3-(Sulfobenzoylamino)-4-chlor-anilin und 3-[N,N-Di-(sulfobenzyl)]-amino-anilin, 2-Sulfo-5-acetylamino-anilin, 2-Amino-5-naphthol-7-sulfonsäure, 2-Amino-8-naphthol-6-sulfonsäure, 1-(4'-Aminobenzoyl)-amino-8-hydroxynaphthalin-3,6-disulfonsäure, 1-(4'-Aminobenzoyl)-amino-8-hydroxynaphthalin-4,6-disulfonsäure, 1-(3'-Aminobenzoyl)-amino-8-hydroxynaphthalin-3,6-disulfonsäure, 1-(3'-Aminobenzoyl)-amino-8-hydroxynaphthalin-4,6-disulfonsäure, 1-(2'-Aminobenzoyl)-amino-8-hydroxy-naphthalin-3,6-disulfonsäure, 1-(2'-Aminobenzoyl)-amino-8-hydroxynaphthalin-4,6-disulfonsäure, 2-(3'-Aminobenzoyl)-amino-5-hydroxy-naphthalin-7-sulfonsäure, 2-(2'-Aminobenzoyl)-amino-5-hydroxy-naphthalin-7-sulfonsäure, 2-(4'-Aminobenzoyl)-amino-8-hydroxynaphthalin-6-sulfonsäure, 2-(3'-Aminobenzoyl)-amino-8-hydroxynaphthalin-6-sulfonsäure, 2-(2'-Aminobenzoyl)-amino-8-hydroxynaphthalin-6-sulfonsäure, 2-(4'-Aminobenzoyl)-amino-5-naphthol-7-sulfonsäure, 1-(4'-Amino- oder 1-(4'-Acetylamino-2-sulfophenyl)-3-methyl- oder -3-carboxy-5-pyrazolon, N-(Acetoacetyl)-3-sulfo-4-amino-anilid, 1-Amino-8-naphthol-3,6- oder -4,6-disulfonsäure, 1-(3'-Aminobenzoyl)- oder 1-(4'-Aminobenzoyl)-amino-8-naphthol-3,6- oder -4,6-disulfonsäure, 1-Acetylamino-8-naphthol-3,6-oder -4,6-disulfonsäure, 2-Acetylamino-5-naphthol-7-sulfonsäure, 2-Acetylamino-8-naphthol-6-sulfonsäure, 3-Acetylamino-8-naphthol-6-sulfonsäure, 3-(N-Methylamino)-8-naphthol-6-sulfonsäure, 1-(3'-Amino- oder 1-(3'-Acetylamino-6'sulfophenyl)-3-methyl- oder -3-carboxy-5-pyrazolon, 2-(N-Methyl-N-acetylamino)-oder 2-Methylamino-5-naphthol-7-sulfonsäure, N-Methyl-anilin und N-Propyl-mtoluidin.

Geht man von Diazokomponenten der Formel $H_2N$-D-$NH_2$ bzw. $H_2N$-$D_1$-$NH_2$ aus, so können diese auch in der Form der Monoacylamino-amino-Verbindungen eingesetzt werden, wobei der Acylrest insbesondere der Acetylrest ist. Diese Monoacylamino-amino-Verbindungen werden zunächst diazotiert und mit einer kuppelfähigen Verbindung gekuppelt; anschließend wird der Acylrest hydrolytisch abgespalten, und die so nunmehr wieder frei gewordene Aminogruppe kann mit dem faserreaktiven Rest $Z^1$ verbunden werden. Solche monoacylierten Diamine sind beispielsweise 2-Sulfo-5-acetylamino-anilin und 2-Sulfo-4-acetylamino-anilin. In gleicher Weise können aminogruppenhaltige Kupplungskomponenten in Form des Acylamino-Derivates in die Kupplungsreaktion eingesetzt werden, wobei anschließend auch hier der Acylrest hydrolytisch abgespalten werden kann, um die freiwerdende Aminogruppe mit der faserreaktiven Gruppe $Z^1$ zu verbinden. Bivalente Kupplungskomponenten, die zum Aufbau erfindungsgemäßer Disazofarbstoffe dienen können, in welchen der bivalente Kupplungsrest mit zwei Diazokomponenten verbunden ist, von denen die eine einen faserreaktiven Rest $R^G$ und die andere einen faserreaktiven Rest Z enthält, beispielsweise von Farbstoffen der allgemeinen Formeln (4c) und (4d), sind beispielsweise Resorcin, 1,3-Diaminobenzol, 5,5'-Dihydroxy-7,7'-disulfo-2,2'-dinaphthyl-harnstoff, 1,8-Dihydroxy-3,6-disulfo-naphthalin und insbesondere 1-Amino-8-naphthol-3,6-disulfonsäure und 1-Amino-8-naphthol-4,6-disulfonsäure.

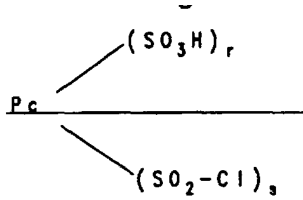

(63)

Die erfindungsgemäßen Farbstoffe der Formel (1) eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürlichen Cellulosefasern, wie Baumwolle, Leinen und Hanf, sowie Zellstoff und regenerierte Cellulose. Die Farbstoffe der Formel (1) sind auch zum Färben oder Bedrucken von hydroxygruppenhaltigen Fasern geeignet, die in Mischgeweben enthalten sind, z.B. von Gemischen aus Baumwolle mit Polyesterfasern oder Polyamidfasern.

Die erfindungsgemäßen Farbstoffe lassen sich auf verschiedene Weise auf das Fasermaterial applizieren und auf der Faser fixieren, insbesondere in Form von wäßrigen Farbstofflösungen und -druckpasten. Sie eignen sich sowohl für das Ausziehverfahren als auch zum Färben nach dem Foulard-Färbeverfahren, wonach die Ware mit wäßrigen, gegebenenfalls salzhaltigen Farbstofflösungen imprägniert und der Farbstoff nach einer Alkalibehandlung oder in Gegenwart von Alkali, gegebenenfalls unter Wärmeeinwirkung, fixiert wird. Besonders geeignet sind die erfindungsgemäßen Farbstoffe für das sogenannte Kaltverweilverfahren, wonach der Farbstoff zusammen mit dem Alkali auf dem Foulard aufgebracht und danach durch mehrstündiges Lagern bei Raumtemperatur fixiert wird. Nach dem Fixieren werden die Färbungen oder Drucke mit kaltem und heißem Wasser, gegebenenfalls unter Zusatz von eines dispergierend wirkenden und die Diffusion der nicht fixierten Anteile fördernden Mittels, gründlich gespült. Diese Färbe- und Druckverfahren sind zahlreich in der allgemeinen Fachliteratur wie auch in der Patentliteratur beschrieben.

Gegenstand der vorliegenden Erfindung ist deshalb auch die Verwendung der erfindungsgemäßen Farbstoffe der allgemeinen Formel (1) zum Färben (einschließlich des Bedrucken) dieser Materialien bzw. Verfahren zum Färben (und Bedrucken) solcher Materialien in an und für sich üblicher Verfahrensweise, bei welchen ein Farbstoff der allgemeinen Formel (1) als Farbmittel eingesetzt wird, indem man den Farbstoff der allgemeinen Formel (1) im wäßrigen Medium auf das Material appliziert und ihn mittels Wärme oder mittels einer alkalisch wirkenden Verbindung oder mittels beidem auf dem Material fixiert.

Die Farbstoffe der Formel (1) zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern bei Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist.

Die nachfolgenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form ihrer Alkalimetallsalze angegeben. Im allgemeinen werden sie in Form ihrer Alkalimetallsalze, wie Lithium-, Natrium oder Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die für die erfindungsgemäßen Farbstoffe angegebenen Absorptionsmaxima ($\lambda_{max}$) im sichtbaren Bereich wurden anhand ihrer Alkalimetallsalze in wäßriger Lösung ermittelt. In den Tabellenbeispielen sind die $\lambda_{max}$-Werte bei der Farbtonangabe in Klammern gesetzt; die Wellenlängenangabe bezieht sich auf nm.

Beispiel A

18,6 g Trichlortriazin wurden in 200 ml Eiswasser suspendiert, 4,2 g Cyanamid zugegeben und der pH mit Natronlauge über 3 Stunden bei pH 8 - 9 gehalten. Danach wurden 25 g -2-(β-Sulfatoethylsulfonyl-N-methyl-ethylamin zugegeben, die Mischung auf 50 °C angeheizt und der pH durch Soda bei pH 6 - 6,5 gehalten.

Die entstandene wässrige Lösung der folgenden Verbindung

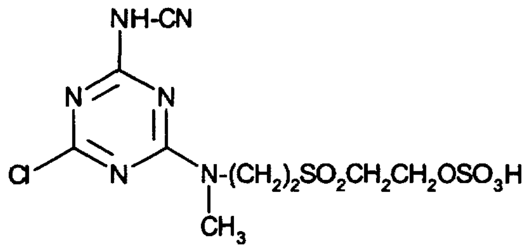

M = 401

kann direkt zu weiteren Umsetzungen verwendet werden, kann aber auch durch Eindampfen oder Aussalzen isoliert

werden.

Beispiel B:

Man setzt wie in Beispiel A beschrieben 18,6 g Trichlortriazin mit Cyanamid um, und gibt danach 30 g N-Phenyl-2-(β-sulfatoethyl-sulfonyl)ethylamin hinzu, stellt einen pH-Wert von 1 - 2 ein, und hält diesen Wert durch Zugabe von Sodalösung über 4 Stunden. Anschließend wird der pH auf 6,5 - 7 gestellt. Die entstandene wässrige Lösung der folgenden Verbindung

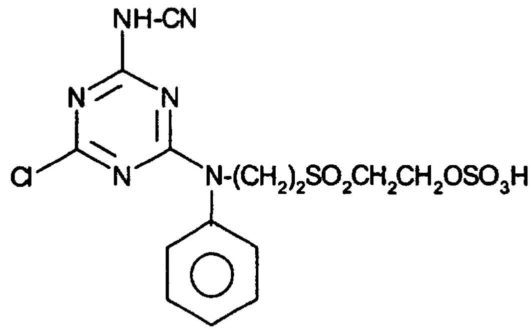

kann direkt zu weiteren Umsetzungen eingesetzt werden, kann aber auch durch Eindampfen oder Aussalzen isoliert werden.

Analog zu Beispiel A wurden folgende Verbindungen mit Chlortriazin und Cyanamid umgesetzt:

| Beispiel | Amin |
|---|---|
| D | 2-(ß-Chlorethylsulfonyl)ethylamin |
| E | 2-(ß-Chlorethylsulfonyl)-ethyloxyethylamin |

Beispiel 1: 40 g des Vorproduktes aus Beispiel A wurden in 400 ml Wasser gelöst. 30 g 1-Amino-8-naphthol-3,6-disulfonsäure wurden fest hinzugegeben, der Ansatz auf 60 - 70 °C erhitzt, und dabei ein pH von 4 gehalten. Nach beendeter Umsetzung wurde ca. 5 Stunden, auf 0 - 5 °C abgekühlt.

28 g 4-(β-Sulfatoethylsulfonyl)anilin wurden in bekannter Weise diazotiert und bei pH 4 - 5 angekuppelt, wobei der pH mit Sodalösung gehalten wurde.

Der erhaltene Farbstoff der folgenden Konstitution

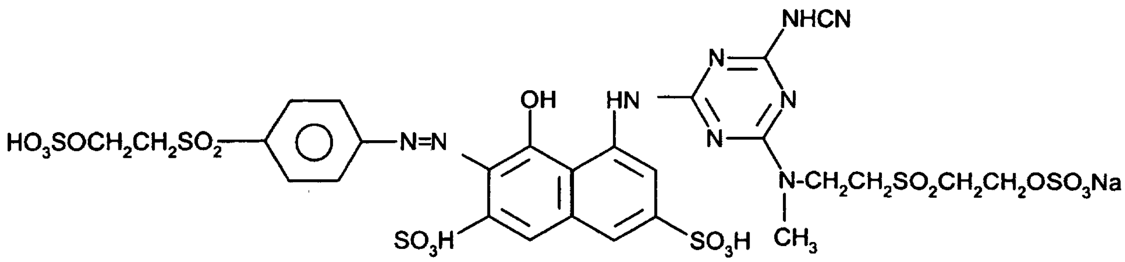

färbt und bedruckt Baumwolle in blaustichig roten Tönen und guten allgemeinen Echtheiten.

$$\lambda_{max} = 520 \text{ nm.}$$

Beispiel 5: Zu der in Beispiel A erhaltenen Lösung des Vorproduktes wurden 16 g 1,3-Diaminobenzol-4-sulfonsäure hinzugegeben, die Lösung auf 60 °C erwärmt und ein pH von 4,5 - 5 mit Sodalösung gehalten. Nach 5 Stunden wurde auf 0 - 5 °C abgekühlt und 25 g in bekannter Art und Weise diazotiertes 4-(β-Sulfatoethylsulfonyl)anilin zugegeben, und bei pH 5,5 - 6 angekuppelt. Der erhaltene Farbstoff der folgenden Konstitution wurde durch Aussalzen isoliert.

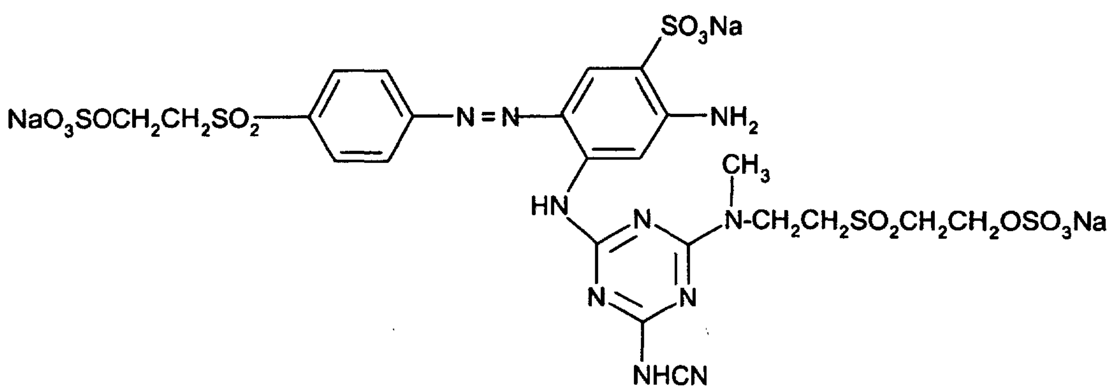

Zu dem wurden folgende Komponenten miteinander umgesetzt:

| | | | | |
|---|---|---|---|---|
| 24 | 1-(4-β-Sulfatoethylsulfonyl)-phenyl)-3-methyl-pyrazolon-5 | 1,3-Diaminobenzol-4-sulfonsäure | Bsp. A | gelb |

Analog zu Bsp. 5 wurden folgende Komponenten miteinander umgesetzt:

| | | | | |
|---|---|---|---|---|
| 26 | 4-(β-Sulfatoethylsulfonyl)anilin | 1,3-Diaminobenzol-4-sulfonsäure | Bsp.B | goldgelb |
| 27 | | | | |
| 28 | 4-(β-Sulfatoethylsulfonyl)anilin | 1,3-Diaminobenzol-4- sulfonsäure | Bsp. D | goldgelb |
| 29 | 4-(β-Sulfato-ethylsulfonyl)anilin | 1,3-Diaminobenzol-4-sulfonsäure | Bsp.E | goldgelb |

**Patentansprüche**

1. Farbstoff entsprechend der allgemeinen Formel (1)

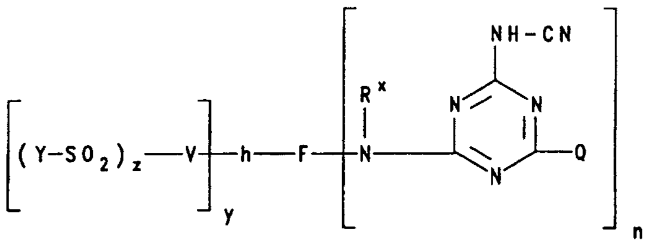

(1)

in welcher bedeuten:

F ist der Rest eines Monoazo-, Disazo- oder Polyazofarbstoffes oder eines davon abgeleiteten Schwermetallkomplex-Azofarbstoffes oder eines , Azomethin-, Dioxazin-, Phenazin-, Stilben-, Triphenylmethan-, Xanthen-, Thioxanthen-, Nitroaryl-, Naphthochinon-, Pyrenchinon- oder Perylentetracarbimid-Farbstoffes;

$R^x$ ist ein Wasserstoffatom oder eine Alkylgruppe von 1 bis 4 C-Atomen, die durch Halogen, Hydroxy, Cyano, Alkoxy von 1 bis 4 C-Atomen, Alkoxycarbonyl von 2 bis 5 C-Atomen, Carboxy, Sulfamoyl, Sulfo oder Sulfato substituiert sein kann, bevorzugt die Methyl- oder Ethylgruppe und insbesondere ein Wasserstoffatom;

n ist die Zahl 1 oder 2, bevorzugt 1;

Q ist eine Gruppe der allgemeinen Formel (2)

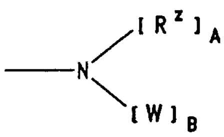

(2)

in welcher

$R^z$ ein Wasserstoffatom oder eine Alkylgruppe von 1 bis 4 C-Atomen ist, die durch Halogen, Hydroxy, Cyano, Alkoxy von 1 bis 4 C-Atomen, Carboxy, Sulfamoyl, Sulfo oder Sulfato oder durch einen gegebenenfalls durch Substituenten aus der Gruppe Halogen, Alkoxy von 1 bis 4 C-Atomen, Alkyl von 1 bis 4 C-Atomen, Sulfo und Carboxy substituierten Phenylrest substituiert sein kann, oder ein Cyclohexylrest oder ein gegebenenfalls durch Substituenten aus der Gruppe Halogen, Alkoxy von 1 bis 4 C-Atomen, Alkyl von 1 bis 4 C-Atomen, Sulfo und Carboxy substituierter Phenylrest ist,

W : Alkylen-$SO_2Y$, Alkylen-Het-Alkylen-$SO_2Y$ ist, worin Alkylen Alkylenreste von 1 bis 2 C-Atomen bedeutet, Het eine Gruppe -O-, -NH-, -N(Alkyl)- mit Alkyl der obengenannten Bedeutung, -S- oder $SO_2$ und Y die untengenannte Bedeutung besitzt

A die Zahl Null oder 1 bedeutet und

B die Zahl 1 oder 2 bedeutet,
wobei die Summe von (A + B) gleich der Zahl 2 ist und wobei im Falle von B gleich 2 die Gruppen der Formel $-W-(SO_2-Y)_z$ zueinander die gleich Bedeutung oder eine voneinander verschiedene Bedeutung haben können;

V ist eine direkte Bindung oder eine Alkylengruppe oder ist ein gegebenenfalls substituierter Arylenrest oder ein Alkylen-arylen- oder Arylen-alkylen- oder Alkylen-arylen-alkylen- oder Arylen-alkylen-arylen-Rest oder eine durch eine der nachstehenden Heterogruppen unterbrochener Arylen-arylen-Rest, wobei die Alkylenreste solche von 1 bis 8 C-Atomen sind und substituiert sein können und die Arylenreste gegebenenfalls substituierte Phenylen- oder Naphthylenreste sind und wobei die Alkylenreste durch 1 oder mehrere Heterogruppen, wie
-NH-, -N(R)- mit R gleich Alkyl von 1 bis 4 C-Atomen, das durch Sulfo, Carboxy, Sulfato, Phenyl oder Sulfophenyl substituiert sein kann, -O-, -S-, $-SO_2-$, -CO- $-SO_2-NH-$, $-NH-SO_2-$, -NH-CO- und -CO-NH-, unterbrochen sein können und die Alkylen- und Arylenanteile in den kombinierten Alkylen/Arylen-Resten jeweils durch eine solche Heterogruppe voneinander getrennt sein können;

y ist die Zahl 1 oder 2;

z ist die Zahl 1 oder 2;

h ist im Falle von y gleich 2 ein N-Atom oder im Falle von y gleich 1 eine Gruppe der Formel -NH-, -N(R)- mit

R einer der obengenannten Bedeutungen, -NH-CO-NH-, -NH-CO- oder -CO-NH- oder eine direkte Bindung;

Y ist die Vinylgruppe oder ist eine Ethylgruppe, die in β-Stellung einen alkalisch eliminierbaren Substituenten enthält, wobei die Gruppe(n) $-SO_2-Y$ direkt oder über einen Alkylenrest von 1 bis 4 C-Atomen oder über eine Alkylaminogruppe von 1 bis 4 C-Atomen an ein aromatisches Kohlenstoffatom von F oder V gebunden sein kann (können).

**2.** Farbstoffe nach Anspruch 1 in denen $R^x$ und $R^z$ Wasserstoff bedeuten;

**3.** Farbstoff nach Anspruch 1 , in denen $R^z$ Methyl bedeutet;

**4.** Farbstoff nach Anspruch 1 bis 3, in denen W $-(CH_2)_2SO_2Y$ bedeutet.

**5.** Farbstoffe nach Anspruch 1 bis 4, in denen y die Zahl 1 und V eine direkte Bindung darstellen.

**6.** Farbstoffe gemäß Anspruch 1 bis 5, in denen F ein Rest der Formel (X) bedeutet

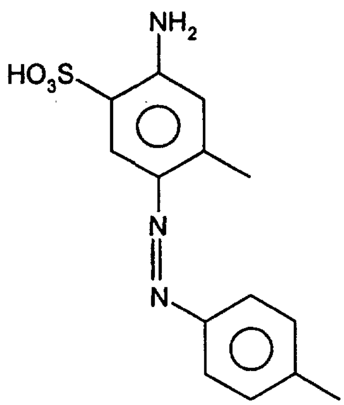

(X)

**7.** Verfahren zum Färben und Bedrucken von Baumwolle unter Verwendung von Farbstoffen nach mindestens einem der Ansprüche 1 bis 6.

**8.** Verfahren zur Herstellung von Farbstoffen gemäß Anspruch 1 bis 6, **dadurch gekennzeichnet, daß** man ein Trichlortriazin zuerst mit Cyanamid, danach mit einem Amin der allgemeinen Formel HQ, wobei Q wie in Anspruch 1 definiert ist, umsetzt und anschließend den Endfarbstoff herstellt.

## Claims

**1.** A dye conforming to the general formula (1)

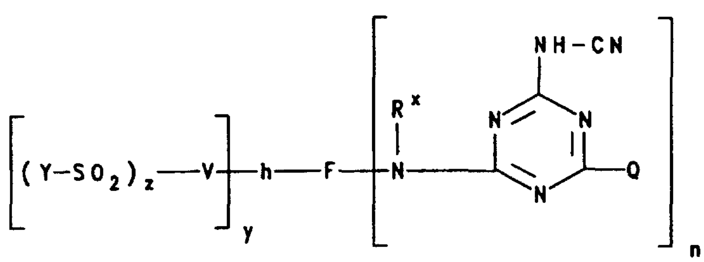

(1)

where

F is the residue of a monoazo, disazo or polyazo dye or of a derived heavy metal complex azo dye or of an

azomethine, phenazine, stilbene, triphenylmethane, xanthene, thioxanthene, nitroaryl, naphthoquinone, pyrenequinone or perylenetetracarbimide dye;

$R^x$ is a hydrogen atom or an alkyl group of 1 to 4 carbon atoms, which may be substituted by halogen, hydroxyl, cyano, alkoxy of 1 to 4 carbon atoms, alkoxycarbonyl of 2 to 5 carbon atoms, carboxyl, sulfamoyl, sulfo or sulfato, preferably methyl or ethyl and especially a hydrogen atom;

n is 1 or 2, preferably 1;

Q is a group of the general formula (2)

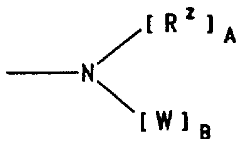

(2)

where

$R^Z$ is a hydrogen atom or an alkyl group of 1 to 4 carbon atoms, which may be substituted by halogen, hydroxyl, cyano, alkoxy of 1 to 4 carbon atoms, carboxyl, sulfamoyl, sulfo, sulfato, phenyl or phenyl substituted by substituents selected from the group consisting of halogen, alkoxy of 1 to 4 carbon atoms, alkyl of 1 to 4 carbon atoms, sulfo and carboxyl, or is a cyclohexyl radical, a phenyl radical or a phenyl radical substituted by substituents selected from the group consisting of halogen, alkoxy of 1 to 4 carbon atoms, alkyl of 1 to 4 carbon atoms, sulfo and carboxyl,

W is alkylene-$SO_2$-Y, alkylene-Het-alkylene-$SO_2$-Y, where alkylene represents alkylene radicals of 1 or 2 carbon atoms, Het is -O-, -NH-, -N(alkyl)- where alkyl is as defined above, -S- or $SO_2$ and Y is as defined below;

A is zero or 1, and

B is 1 or 2,

the sum of (A + B) is 2 and in the event of B being 2 the groups of the formula -W-$(SO_2\text{-}Y)_z$ being identical to or different from each other;

V is a direct bond or an alkylene group or is a substituted or unsubstituted arylene radical or an alkylene-arylene or arylene-alkylene or alkylene-arylene-alkylene or arylene-alkylene-arylene radical or an arylene-arylene radical interrupted by one of the hetero groups indicated hereinafter, where the alkylene radicals are alkylene radicals of 1 to 8 carbon atoms and may be substituted, and the arylene radicals are substituted or unsubstituted phenylene or naphthylene radicals, and where the alkylene radicals may be interrupted by 1 or more hetero groups, such as

-NH-, -N(R)- where R is alkyl of 1 to 4 carbon atoms which may be sulfo-, carboxyl-, sulfato-, phenyl- or sulfophenyl-substituted, -O-, -S-, -$SO_2$-, -CO-, -$SO_2$-NH-, -NH-$SO_2$-, -NH-CO- and -CO-NH-, and the alkylene and arylene moieties in the combined alkylene/arylene radicals may in each case be separated from each other by such a hetero group;

y is 1 or 2;

z is 1 or 2;

h is for y = 2 a nitrogen atom or for y = 1 a group of the formula -NH-, -N(R)- where R is as defined above, -NH-CO-NH-, -NH-CO- or -CO-NH- or a direct bond;

Y is vinyl or is an ethyl group β-substituted by an alkali-eliminable substituent,

and the -$SO_2$-Y group or groups may be attached to an aromatic carbon atom of F or V directly or via an alkylene radical of 1 to 4 carbon atoms or via an alkylamino group of 1 to 4 carbon atoms.

**2.** A dye as claimed in claim 1 wherein $R^X$ and $R^Z$ are each hydrogen.

**3.** A dye as claimed in claim 1 wherein $R^Z$ is methyl.

**4.** A dye as claimed in any of claims 1 to 3 wherein W is $-(CH_2)_2SO_2Y$.

**5.** A dye as claimed in any of claims 1 to 4 wherein y is 1 and V is a direct bond.

**6.** A dye as claimed in any of claims 1 to 5 wherein F is a radical of the formula (X)

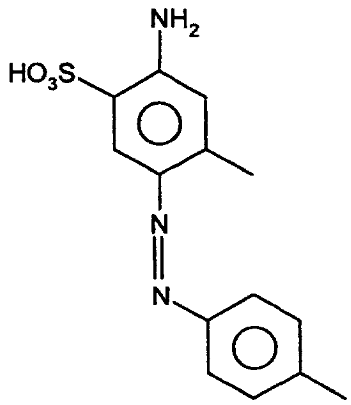

(X)

7. A process for dyeing and printing cotton using dyes as claimed in at least one of claims 1 to 6.

8. A process for preparing a dye as claimed in any of claims 1 to 6, which comprises reacting a trichlorotriazine first with cyanamide and then with an amine of the general formula HQ where Q is as defined in claim 1 and subsequently preparing the final dye.

**Revendications**

1. Colorant correspondant à la formule générale (1)

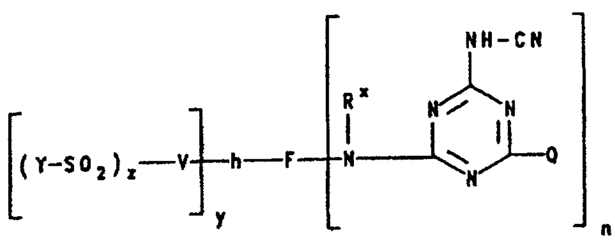

(1)

dans laquelle :

F est le reste d'un colorant monoazoïque, disazoïque ou polyazoïque ou d'un colorant azoïque sous forme de complexe avec un métal lourd, dérivé de celui-ci, ou d'un colorant azométhine, phénazine, stilbène, triphénylméthane, xanthène, thioxanthène, nitroaryle, naphtoquinone, pyrènequinone ou pérylènetétracarbimide ;

$R^x$ est un atome d'hydrogène ou un groupe alkyle ayant de 1 à 4 atomes de carbone, qui peut être substitué par un atome d'halogène ou par un groupe hydroxy, cyano, alcoxy ayant de 1 à 4 atomes de carbone, alcoxycarbonyle ayant de 2 à 5 atomes de carbone, carboxy, sulfamoyle, sulfo ou sulfato, de préférence le groupe méthyle ou éthyle et en particulier un atome d'hydrogène ;

n est le nombre 1 ou 2, de préférence 1 ;

Q est un groupe de formule générale (2)

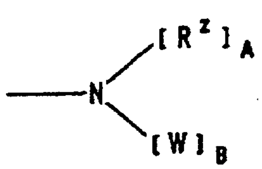

(2)

dans laquelle

$R^z$ est un atome d'hydrogène ou un groupe alkyle ayant de 1 à 4 atomes de carbone, qui peut être substitué

par un atome d'halogène ou par un groupe hydroxy, cyano, alcoxy ayant de 1 à 4 atomes de carbone, carboxy, sulfamoyle, sulfo ou sulfato, ou par un radical phényle portant éventuellement des substituants choisis dans le groupe constitué par des atomes d'halogène, des groupes alcoxy ayant de 1 à 4 atomes de carbone, alkyle ayant de 1 à 4 atomes de carbone, sulfo et carboxy, ou est un radical cyclohexyle ou un radical phényle portant éventuellement des substituants choisis dans le groupe constitué par des atomes d'halogène, des groupes alcoxy ayant de 1 à 4 atomes de carbone, alkyle ayant de 1 à 4 atomes de carbone, sulfo et carboxy,

W représente un groupe alkylène-$SO_2Y$, alkylène-Het-alkylène-$SO_2Y$, les radicaux alkylène étant des radicaux alkylène ayant 1 ou 2 atomes de carbone,
Het représente un groupe -O-, -NH-, -N(alkyl)- où alkyle a la signification donnée ci-dessus, -S- ou $SO_2$ et Y a la signification donnée ci-dessus,

A représente le nombre zéro ou 1 et

B représente le nombre 1 ou 2,
la somme (A + B) étant égale au nombre 2 et, dans le cas où B est égal à 2, les groupes de formule -W-($SO_2$-Y)$_z$ pouvant avoir la même signification l'un et l'autre ou avoir des significations différentes l'une de l'autre ;

V est une liaison directe ou est un groupe alkylène ou est un radical arylène éventuellement substitué ou un radical alkylène-arylène ou arylène-alkylène ou alkylène-arylène-alkylène ou arylène-alkylène-arylène ou un radical arylène-arylène interrompu par un des hétérogroupes suivants, les radicaux alkylène pouvant être ceux ayant de 1 à 8 atomes de carbone et être substitués et les radicaux arylène étant des radicaux phénylène ou naphtylène éventuellement substitués, et les radicaux alkylène pouvant être interrompus par 1 ou plusieurs hétérogroupes, tels que
- NH-, -N(R)-, où R est un groupe alkyle ayant de 1 à 4 atomes de carbone, qui peut être substitué par un groupe sulfo, carboxy, sulfato, phényle ou sulfophényle, -O-, -S-, -$SO_2$-, -CO-, -$SO_2$-NH-, -NH-$SO_2$-, -NH-CO- et - CO-NH-, et les fragments alkylène et arylène dans les radicaux alkylène/arylène combinés pouvant être chaque fois séparés l'un de l'autre par un tel hétérogroupe ;

y est le nombre 1 ou 2 ;

z est le nombre 1 ou 2 ;

h est, dans le cas où y est égal à 2, un atome d'azote ou, dans le cas où y est égal à 1, un groupe de formule -NH-, -N(R)- où R a l'une des significations précédentes, -NH-CO-NH-, -NH-CO- ou -CO-NH- ou une liaison directe ;

Y est le groupe vinyle ou est un groupe éthyle qui porte en position β un substituant susceptible d'être éliminé par voie alcaline, le(s) groupe(s) -$SO_2$-Y pouvant être lié(s) directement ou par l'intermédiaire d'un radical alkylène ayant de 1 à 4 atomes de carbone ou par l'intermédiaire d'un groupe alkylamino ayant de 1 à 4 atomes de carbone à un atome de carbone aromatique de F ou V.

**2.** Colorants selon la revendication 1, dans lesquels $R^x$ et $R^z$ représentent des atomes d'hydrogène.

**3.** Colorant selon la revendication 1, dans lequel $R^z$ représente le groupe méthyle.

**4.** Colorant selon l'une quelconque des revendications 1 à 3, dans lequel W représente un groupe W-$(CH_2)_2SO_2Y$.

**5.** Colorants selon l'une quelconque des revendications 1 à 4, dans lesquels y représente le nombre 1 et V représente une liaison directe.

**6.** Colorants selon l'une quelconque des revendications 1 à 5, dans lesquels F représente un reste de formule (X)

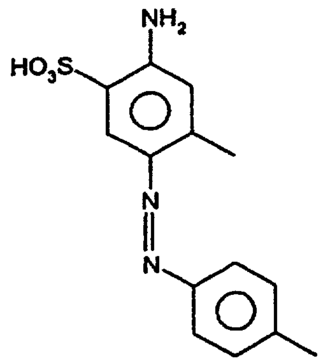

(X)

7. Procédé pour la teinture et l'impression du coton, avec utilisation de colorants selon au moins l'une des revendications 1 à 6.

8. Procédé pour la préparation de colorants selon l'une quelconque des revendications 1 à 6, **caractérisé en ce qu'**on fait réagir une trichlorotriazine d'abord avec du cyanamide, ensuite avec une amine de formule générale HQ, Q étant tel que défini dans la revendication 1, et ensuite on prépare le colorant final.